# EUROPEAN PATENT SPECIFICATION

(11) **EP 4 524 740 B1**
(45) Date of publication and mention of the grant of the patent: **02.09.2026**
(21) Application number: 23846858.1
(22) Date of filing: 07.07.2023
(51) Int. Cl.: G06F 9/50, G06F 9/48, G06F 9/455, G06F 9/54

(54) **COMPUTING DEVICE AND OPERATION METHOD THEREFOR**
RECHNERVORRICHTUNG UND BETRIEBSVERFAHREN DAFÜR
DISPOSITIF INFORMATIQUE ET PROCÉDÉ DE FONCTIONNEMENT ASSOCIÉ

(30) Priority: 28.07.2022 KR 20220093876
(43) Date of publication of application: 19.03.2025
(73) Proprietor: Samsung Electronics Co., Ltd., Suwon-si, Gyeonggi-do 16677 (KR)
(72) Inventor: KIM, Backki, Suwon-si, Gyeonggi-do 16677 (KR); SEO, Bongwon, Suwon-si, Gyeonggi-do 16677 (KR)
(74) Representative: Appleyard Lees IP LLP
(86) International application number: PCT/KR2023/009629
(87) International publication number: WO 2024/025199

(56) References cited:
- CN-A- 102 541 651
- JP-A- 2020 135 167
- KR-A- 20200 097 579
- KR-B1- 102 339 095
- US-A1- 2014 173 113
- US-A1- 2014 331 222
- US-A1- 2020 257 564
- US-B1- 8 424 007

## Description

### TECHNICAL FIELD

The disclosure relates to a computing device and an operating method thereof, and for example, to a computing device that schedules processing resources, the computing device including a host system and a virtual machine system, and to an operating method thereof.

### BACKGROUND ART

A virtual machine represents a software implementation of a computing environment, that is, software that emulates a computer system. A system virtual machine provides a complete system platform and supports the execution of a complete operating system (OS). These system virtual machines multiplex physical computers that form a base between the virtual machines running each operating system.

A computing device may include a host system and one or more virtual machine systems, and each virtual machine system has its own processing resources scheduler. Each processing resources scheduler in the virtual machine system is in charge of allocating processing resources of the computing device. As the processing resources scheduler in the host system and the processing resources scheduler in the virtual machine system are independent of each other, a method of controlling the processing resources scheduler in the virtual machine system is required for efficient distribution of processing resources in the computing device. US 2020/257564 A1 describes an electronic device, storage medium and method for process scheduling. The mechanism disclosed therein describes cooperative scheduling in a virtualised computing system including a host operating system, a hypervisor and one or more virtual machines. A virtual scheduler in each virtual machine provides process information to a host-side management module. A host scheduler combines this with a host ready queue and applies a scheduling policy and priorities to select host and virtual-machine processes, allocate CPU cores and return allocation information via the hypervisor so that the selected processes can be executed in the virtual machines.

### DESCRIPTION OF EMBODIMENTS

### TECHNICAL PROBLEM

Embodiments of the disclosure provide a computing device that schedules processing resources, the computing device including a host system and a virtual machine system, and an operating method thereof.

### SOLUTION TO PROBLEM

According to an example embodiment of the disclosure, a method of operating a computing system including a host system and a virtual machine system as defined by claim 1 of the claims appended hereto is provided.

According to an example embodiment of the disclosure, a method of operating a computing system including a host system and a virtual machine system as defined by claim 6 of the claims appended hereto is provided.

According to an embodiment of the disclosure, a computing device as defined by claim 7 of the claims appended hereto is provided.

According to an example embodiment of the disclosure, a computing device as defined by claim 11 of the claims appended hereto is provided.

### ADVANTAGEOUS EFFECTS OF DISCLOSURE

According to an example embodiment of the disclosure, in a computing system including a host system and a virtual machine system, resources preemption scheduling may be effectively performed for a request for executing a virtual machine application.

According to an example embodiment of the disclosure, in a computing system including a host system and a virtual machine system, resources preemption scheduling may be effectively performed for a virtual machine application execution request received by the virtual machine system.

According to an example embodiment of the disclosure, in a computing system including a host system and a virtual machine system, resources preemption scheduling may be effectively performed for a virtual machine application execution request received by the host system.

### BRIEF DESCRIPTION OF THE DRAWINGS

FIG. 1 is a diagram illustrating an example of a computing device including a host system and a virtual machine system, according to various embodiments;
FIG. 2 is a block diagram illustrating an example configuration of a computing device including a host system and a virtual machine system, according to various embodiments;
FIG. 3 is a signal flow diagram illustrating an example method of a operating computing device when a request for executing a virtual machine application is received, according to various embodiments;
FIG. 4 is a signal flow diagram illustrating an example method of operating a computing device when a request for executing a virtual machine application is received, according to an embodiment of the disclosure.
FIG. 5 is a block diagram illustrating an example configuration of a computing device including an Android system, which is an example of a virtual machine system, according to various embodiments;
FIG. 6 is a diagram illustrating an example of a host scheduling list according to various embodiments;
FIG. 7 is a signal flow diagram illustrating an example method of operating a computing device illustrated in FIG. 6, according to various embodiments;
FIG. 8 is a signal flow diagram illustrating an example method of operating a computing device illustrated in FIG. 6, according to various embodiments;
FIG. 9 is a flowchart illustrating an example method of operating a computing device when a host system receives a request for executing a virtual machine application, according to various embodiments;
FIG. 10 is a diagram illustrating an example of an environment in which a host system receives a request for executing a virtual machine application, according to various embodiments;
FIG. 11 is a block diagram illustrating an example configuration of a computing device including an Android system, which is an example of a virtual machine system, according to various embodiments;
FIG. 12 is a signal flow diagram illustrating an example method of operating a computing device illustrated in FIG. 11, according to various embodiments; and
FIG. 13 is a block diagram illustrating an example configuration of a computing device according to various embodiments.

### MODE OF DISCLOSURE

The terms used in the disclosure are briefly described and the disclosure is described in greater detail.

The terms used in the disclosure have been selected from currently widely used general terms in consideration of the functions in the disclosure. However, the terms may vary according to the intention of one of ordinary skill in the art, case precedents, and the advent of new technologies. Furthermore, for special cases, meanings of arbitrarily selected terms are described in detail in the disclosure. Accordingly, the terms used in the disclosure are defined based on their meanings in relation to the contents discussed throughout the disclosure, not by their simple meanings.

When a part may "include" a certain element, unless specified otherwise, it may not be construed to exclude another element but may be construed to further include other elements. Furthermore, terms such as "... portion," "... unit," "... module," and "... block" stated in the disclosure may refer to a unit to process at least one function or operation and the unit may be embodied by hardware, software, or a combination of hardware and software.

Hereinafter, with reference to the accompanying drawings, various example embodiment of the disclosure will be described in greater detail. However, the various example embodiments may be implemented in various forms, not by being limited to the examples presented below. To clearly describe the various embodiments, irrelevant portions to the description may be omitted, and in the description with reference to the drawings, the same or corresponding elements are indicated by the same reference numerals and redundant descriptions thereof may not be repeated.

In the embodiments of the disclosure, the term "user" refers to a person who controls the function or operation of an image generating device using the image generating device, and may include a viewer, an administrator, or an installation engineer.

Computers include general purpose CPUs or processors designed to execute a set of system instructions. A processor executes instructions specific to a processor, and a set of instructions that the processor can execute is called an instruction set of the processor. The uniqueness of processors among computer systems typically results in incompatibility of the computer systems' hardware architecture. In general, computer manufacturers want more applications to run on their processor families. Accordingly, to increase the number of operating systems and application programs that can be executed on a computer system, a host computer with one type of CPU, referred to as a host, may employ virtual machine technology that allows the host to emulate instructions for another type of CPU, referred to as a guest.

In the disclosure, the unit of work subject to scheduling for resources preemption may include an application, a process, or a task.

In the disclosure, resources scheduled for applications, processes, tasks, or the like may include a CPU, a memory, or other hardware devices.

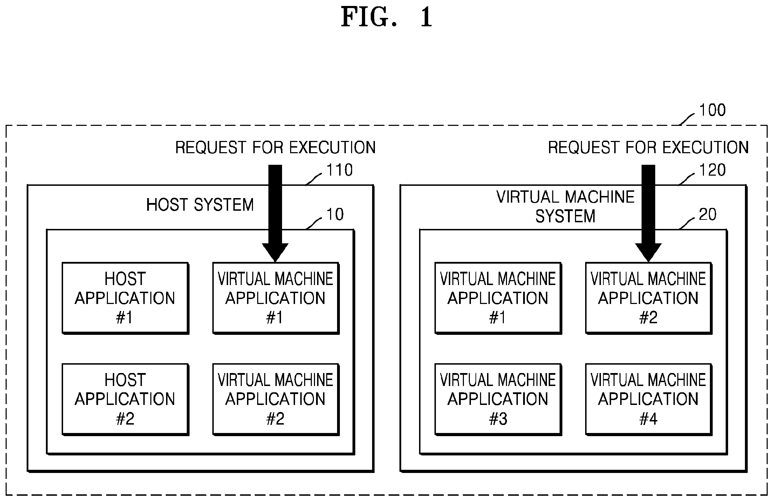

FIG. 1 is a diagram illustrating an example configuration an example of a computing device 100 including a host system 110 and a virtual machine system 120, according to various embodiments.

Referring to FIG. 1, the computing device 100 may include the host system 110 and the virtual machine system 120. A launching application 10 that the host system 110 includes may include a host application and a virtual machine application. For example, in FIG. 1, the launching application 10 is illustrated as including two host applications #1 and #2 and two virtual machine applications #1 and #2. For example, and without limitation, in the Tizen system of Samsung Electronics Co., Ltd., not only a Tizen application, but also an Android application may be included in a Tizen home screen. As such, when a request for executing a virtual machine application is received during the execution of the launching application 10 that is an application of a host system, for the execution of a virtual machine application, it is necessary to effectively control the scheduling of the virtual machine system 120.

The virtual machine system 120 may include virtual machine applications #1, #2, #3, and #4 to be executed in a virtual machine application 20. When a request for executing the virtual machine application #2 that is one of the virtual machine applications #1, #2, #3, and #4 is received during the execution of the virtual machine application 20, for the execution of a virtual machine application requested to be executed, it is necessary to effectively control the scheduling of the virtual machine system 120.

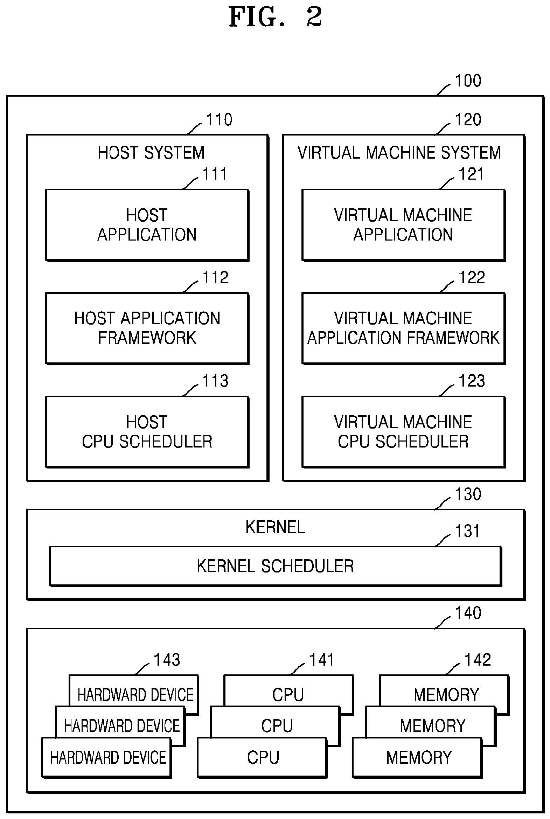

FIG. 2 is a block diagram illustrating an example configuration of the computing device 100 including the host system 110 and the virtual machine system 120, according to various embodiments.

Referring to FIG. 2, the computing device 100 may include the host system 110, the virtual machine system 120, a kernel 130, and a hardware platform 140.

The computing device 100 may refer to a computer that supports the execution of an operating system and one or more application programs. The computing device 100 may be a general purpose computer or a display device. A display device may include various types of electronic devices, for example, and without limitation, network TVs, smart TVs, Internet TVs, web TVs, IPTVs, PCs, and the like, which receive and output content.

The host system 110 provides an operating system platform to execute processes on the computing device 100. The host system 110 controls all hardware devices in the computing device 100 and manage system resources for all application executed therein.

The host system 110 may include a host application 111, a host application framework 112, and a host CPU scheduler 113. The host application framework 112 includes various other components, such as support programs, compilers, code libraries, APIs, classes, and the like, to implement an application program reference structure for a host operating system. The host CPU scheduler 113 is a module for appropriately allocating CPU resources of the host system 110, and may control CPU resources allocation of the virtual machine system 120 by communicating with a virtual machine CPU scheduler 123 of the virtual machine system 120.

According to an embodiment of the disclosure, when receiving a request for confirming a resources preemption right for a virtual machine application from the virtual machine CPU scheduler 123, the host CPU scheduler 113, by referring to a host scheduling list, may determine a resources preemption right of the virtual machine application, and provide information about the determined resources preemption right to the virtual machine CPU scheduler 123.

According to an embodiment of the disclosure, when receiving a request for confirming a resources preemption right for a virtual machine application from the virtual machine CPU scheduler 123, the host CPU scheduler 113, by referring to a host scheduling list, may determine a resources preemption right of the virtual machine application, and provide information about the determined resources preemption right to the kernel 130. In this state, in order to provide the kernel 130 with the resources preemption right information for a virtual machine application, a virtual process identifier (PID) for a virtual machine application may be converted into a Real PID using an identifier (ID) map of the kernel 130.

According to an embodiment of the disclosure, the host CPU scheduler 113, by receiving a request for executing a virtual machine application by the host system 110, may determine a resources preemption right to primarily execute the virtual machine application of which execution is requested, and provide information about the determined resources preemption right to the virtual machine CPU scheduler 123.

The virtual machine system 120 may refer to a software implementation of a physical computing device and implements a computing platform supporting the execution of software applications under the control of a virtual machine operating system software applications. As such, the virtual machines emulate specific computing architectures. The virtual machine system 120 may include, for example, well-known commercial operating systems, such as, Android^{®} of Google LLC, Window^{®} of Microsoft Corporation, Linux^{®} operating system, MacOS^{®} of Apple Inc., and the like.

The virtual machine system 120 may include a virtual machine application 121, a virtual machine application framework 122, and the virtual machine CPU scheduler 123. The virtual machine CPU scheduler 123 is a module for appropriately allocating CPU resources of the virtual machine system 120.

According to an embodiment of the disclosure, when receiving a request for executing a virtual machine application by the virtual machine system 120, the virtual machine CPU scheduler 123 may schedule the execution of the virtual machine application of which execution is requested according to a predetermined algorithm, and provide the scheduling result to the kernel 130. Furthermore, the virtual machine CPU scheduler 123 may transmit a request for confirming a resources preemption right for a virtual machine application to the host CPU scheduler 113, receive resources preemption right information for a virtual machine application from the host CPU scheduler 113, and update scheduling about the virtual machine application according to the received resources preemption right information.

According to an embodiment of the disclosure, when receiving a request for executing a virtual machine application by the host system 110, the virtual machine CPU scheduler 123 may receive, from the host CPU scheduler 113, information about resources preemption right determined by the host CPU scheduler 113 to primarily execute the virtual machine application, and accordingly, based on the information about resources preemption right determined to primarily execute the virtual machine application, schedule to primarily execute the virtual machine application of which execution is requested, and provide the scheduling result to the kernel 130.

The kernel 130 serves to connect the virtual machine system 120 with the hardware platform 140 of the computing device 100, which is a physical component. The kernel 130, as a central operating system component, executes instructions on the host. The kernel 130 allocates memory, schedules an access to a physical CPU, and schedules an access to a physical hardware devices connected to the computing device 100.

The kernel 130 includes a kernel scheduler 131 for scheduling tasks or processes to be executed on physical CPUs of the computing device 100. The kernel scheduler 131 schedules a process to be executed on a specific physical CPU by putting the process in a run queue for the specific physical CPU. Furthermore, the kernel scheduler 131 may rebalance the run queue of a specific physical CPU according to the situation of the physical CPU.

The hardware platform 140 may include one or more physical CPUs 141, one or more memories 142, and one or more physical hardware devices 143. The memories 142 may include a random access memory storing programs currently being executed and data used for the programs. In addition, the hardware platform 140 may include channels, adaptors, and the like.

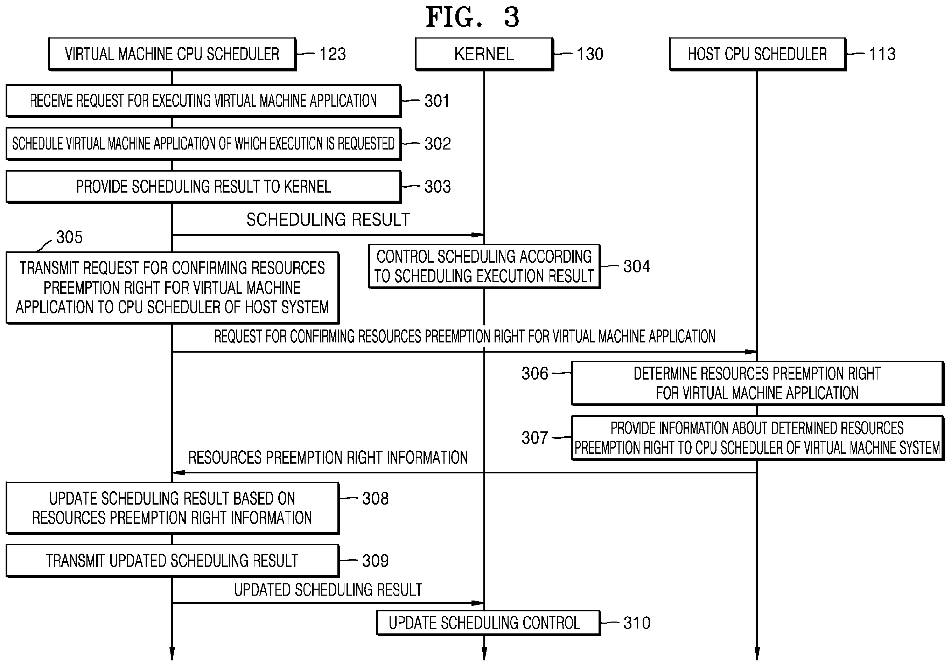

FIG. 3 is a signal flow diagram illustrating an example method of operating a computing device when a request for executing a virtual machine application is received, according to various embodiments.

Referring to FIG. 3, in operation 301, the computing device 100 may receive a request for executing a virtual machine application by a virtual machine system.

In the disclosure, a work unit subject to scheduling for resources preemption may include, for example, an application, a process, a task, or the like. In the following description, for convenience of explanation, the work unit is referred to as an "application".

In operation 302, a resources allocation ranking of the virtual machine application of which execution is requested by a virtual machine CPU scheduler 123, which is a CPU scheduler of a virtual machine system, may be scheduled. The virtual machine CPU scheduler 123 may schedule a resources allocation ranking of the virtual machine application of which execution is requested, according to a predetermined resources allocation algorithm of the virtual machine system. For example, a predetermined resources allocation algorithm may be implemented by a method of scoring according to resources preemption importance of an application. For example, the predetermined resources allocation algorithm may determine a priority score between the minimum value and the maximum value according to the resources preemption importance. For example, the predetermined resources allocation algorithm may determine the priority score between -20 and +20. An application having a high resources allocation priority may be scored as -20, an application having a low resources allocation priority may be scored as +20, and an application having a medium resources allocation priority may be scored as 0.

In operation 303, a scheduling result determined with respect to the virtual machine application may be provided by the virtual machine CPU scheduler 123 to a kernel 130. As such, when there is a request for executing a virtual machine application, the CPU scheduler 123 of a virtual machine system may perform scheduling based on one's own predetermined resources allocation algorithm, without a process of inquiring a host system, and provide a scheduling result directly to the kernel, thereby carrying out the instruction to execute the virtual machine application of which execution is requested without delay.

In operation 304, the kernel 130 having received the scheduling result from the virtual machine CPU scheduler 123 may perform scheduling control with respect to the virtual machine application according to the scheduling result.

In operation 305, a request for confirming a resources preemption right for a virtual machine application may be transmitted by the virtual machine CPU scheduler 123 to a CPU scheduler 113 of the host system (hereinafter, referred to as the host CPU scheduler). The resources preemption right confirmation request for a virtual machine application may refer to a request for confirmation of a resources preemption right for the virtual machine application from the host system.

In operation 306, the resources preemption right for the virtual machine application may be determined by the host CPU scheduler 113. The host CPU scheduler 113 may determine, by referring to a host scheduling list used in the host system, the resources preemption right for the virtual machine application.

When receiving a request for confirming a resources preemption right for a virtual machine application from a CPU scheduler 123 of a virtual machine system, the CPU scheduler 113 of the host system may determine, by referring to a host scheduling list in the host system, a resources preemption right for a virtual machine application.

The host scheduling list may refer a list that contains priority information about applications, which is used to determine a resources preemption right for the applications by the CPU scheduler of the host system in the host system.

According to an embodiment of the disclosure, the host scheduling list may include resources preemption priority information about one or more applications. For example, the resources preemption priority may be set to be high for applications with high resources preemption necessity, and the resources preemption priority may be set to be low for applications with low resources preemption necessity. The resources preemption priority may be determined between predetermined values. For example, the resources preemption priority may have a value between -20 and +20, and may be set as -20 for applications with high resources preemption necessity, +20 for applications with low resources preemption necessity, and 0 for neutral applications.

According to an embodiment of the disclosure, the host scheduling list may include one or more lists representing lists for one or more applications. For example, the host scheduling list may include a rule-based list for applications with the highest resources preemption necessity, a white list for applications with relatively high resources preemption necessity, and a black list for applications with relatively low resources preemption necessity.

The CPU scheduler 113 of the host system may determine, by referring to the host scheduling list as above, the resources preemption right for a virtual machine application.

According to an embodiment of the disclosure, the CPU scheduler 113 of the host system may determine the resources preemption right for a virtual machine application as one of the predetermined values. For example, when the resources preemption priority has a value between -20 and +20, the CPU scheduler of the host system may determine the resources preemption right for a virtual machine application as -20.

According to an embodiment of the disclosure, the CPU scheduler 113 of the host system may determine the resources preemption right for a virtual machine application as a resources preemption permission or a resources preemption rejection.

In operation 307, the host CPU scheduler 113 may provide information about a resources preemption right determined with respect to a virtual machine application to the virtual machine CPU scheduler.

In operation 308, when receiving the information about a resources preemption right determined with respect to a virtual machine application from the host CPU scheduler 113, the virtual machine CPU scheduler 123 may update a scheduling result for the virtual machine application based on the information about a resources preemption right received from the host system. For example, when the scheduling result of the virtual machine CPU scheduler 123 has high priority, and the information about a resources preemption right of the host CPU scheduler 113 is also high, the virtual machine CPU scheduler 123 may need to change the scheduling result for the virtual machine application. When the scheduling result of the virtual machine CPU scheduler 123 has high priority, and the information about a resources preemption right of the host CPU scheduler 113 has low priority, the virtual machine CPU scheduler may change the scheduling result for the virtual machine application to have a lower priority.

In operation 309, the virtual machine CPU scheduler 123 may provide the kernel 130 with an updated scheduling result according to the scheduling result for the virtual machine application, based on the information about a resources preemption right received from the host system.

According to an embodiment of the disclosure, the virtual machine CPU scheduler 123 may not provide the kernel 130 with a scheduling result when there is no change in the scheduling result for the virtual machine application, based on the information about a resources preemption right received from the host system.

In operation 310, the kernel 130 may receive the updated scheduling result from the virtual machine CPU scheduler 123, and update the scheduling control based thereon.

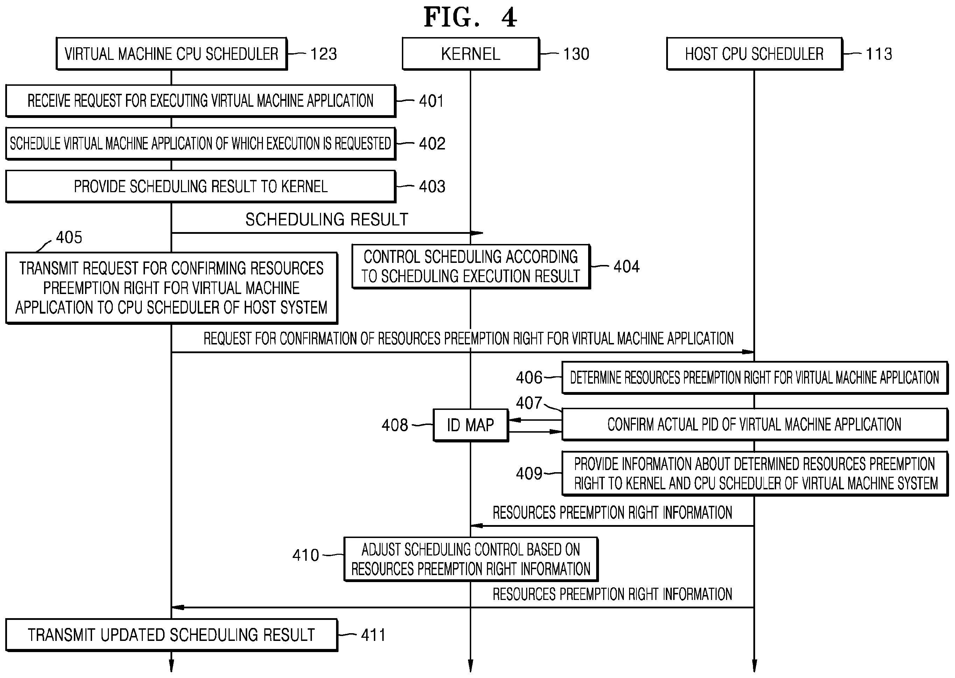

FIG. 4 is a signal flow diagram illustrating an example method of operating a computing device when a request for executing a virtual machine application is received, according to various embodiments.

As the configurations from operation 401 to operation 406 in FIG. 4 are the same as or similar to the configurations from operation 301 to operation 306 in FIG. 3, descriptions thereof may not be repeated here.

In operation 407, the host CPU scheduler 113 may confirm a Real PID of a virtual machine application. The host CPU scheduler 113 may obtain a Real PID of a virtual machine application using an ID map 408 kept by the kernel 130 using a Virtual PID of the virtual machine application of which a request for confirming a resources preemption right is received. The ID map 408 of the kernel 130 may include mapping information of a Virtual PID and a Real PID of a virtual machine application. The Virtual PID is identification information used by the virtual machine system to identify a virtual machine application, and the Real PID is identification information used by the kernel 130 to identify a virtual machine application. The host CPU scheduler may need the Real PID of a virtual machine application to provide the resources preemption right information determined about the virtual machine application directly to the kernel.

In operation 409, the host CPU scheduler 113 may provide the determined information about a resources preemption right to the kernel 130 and the virtual machine CPU scheduler 123.

The host CPU scheduler 113 may provide the resources preemption right information to the kernel 130 using the Real PID corresponding to the virtual machine application obtained in operation 407.

In operation 410, the kernel 130 may control scheduling control based on the resources preemption right information about a virtual machine application scheduling control received from the host CPU scheduler 113.

When the scheduling result of the virtual machine CPU scheduler 123 has high priority, and the information about a resources preemption right of the host CPU scheduler 113 is also high, the kernel 130 may not change scheduling for a virtual machine application. When the scheduling result of the virtual machine CPU scheduler 123 has high priority, and the information about a resources preemption right of the host CPU scheduler 113 has low priority, the kernel 130 may change the scheduling for a virtual machine application to have a lower priority.

As such, as the virtual machine CPU scheduler 123 provides directly to the kernel 130 the resources preemption right information determined for a virtual machine application, the kernel 130 may control scheduling by quickly reflecting the resources preemption priority determined for the virtual machine application.

In operation 411, the virtual machine CPU scheduler 123 may update a scheduling result based on the resources preemption right information about a virtual machine application received from the host CPU scheduler 113.

When the scheduling result of the virtual machine CPU scheduler 123 has high priority, and the information about a resources preemption right of the host CPU scheduler 113 is also high, the virtual machine CPU scheduler may not change scheduling for a virtual machine application. When the scheduling result of the virtual machine CPU scheduler 123 has high priority, and the information about a resources preemption right of the host CPU scheduler 113 has low priority, the virtual machine CPU scheduler 123 may change scheduling for a virtual machine application to have a lower priority.

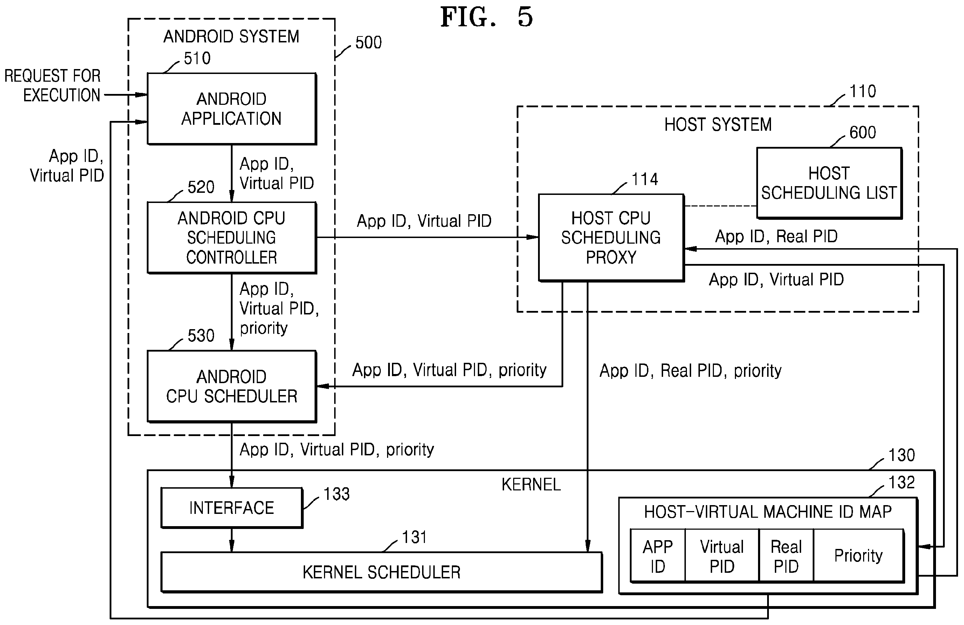

FIG. 5 is a block diagram illustrating an example configuration of the computing device 100 including an Android system, which is an example of a virtual machine system, according to various embodiments.

Referring to FIG. 5, the computing device 100 According to an embodiment of the disclosure, may include an Android system 500, the host system 110, and the kernel 130.

According to an embodiment of the disclosure, the Android system 500 may include an Android application 510, an Android CPU scheduling controller 520, and an Android CPU scheduler 530.

The Android application 510 may receive a request for executing the application. When receiving the request for executing an Android application, the kernel 130 may generate a host-virtual machine the ID map 132 using, as a key, an application ID (APP ID) for the Android application of which execution is requested. The host-virtual machine the ID map 132 may generate a Virtual PID, a Real PID, and a priority, corresponding to the APP ID for an Android application. At the initial generation, priority information may have a null value.

The Android application 510 may receive, from the kernel 130, the APP ID and the Virtual PID corresponding to the virtual machine application of which execution is requested, and provide the APP ID and the Virtual PID to the Android CPU scheduling controller 520.

The Android CPU scheduling controller 520 may determine Resources preemption priority of an Android application according to a predetermined resources allocation priority algorithm in the Android system 500.

The Android CPU scheduling controller 520 may schedule a resources allocation priority for the Android application of which execution is requested according to the predetermined resources allocation algorithm in the Android system 500. For example, the predetermined resources allocation algorithm may be implemented by a method of scoring according to resources preemption importance of an application. For example, the predetermined resources allocation algorithm may determine a priority score between the minimum value and the maximum value according to the resources preemption importance. For example, the predetermined resources allocation algorithm may determine a priority score between -20 and +20. An application having a high resources allocation priority may be scored as -20, an application having a low resources allocation priority may be scored as +20, and an application having a medium resources allocation priority may be scored as 0.

The Android CPU scheduling controller 520 may transmit the App ID, the Virtual PID, and the priority to the Android CPU scheduler 530 to provide a resources preemption priority determined with respect to the virtual machine application of which execution is requested.

The Android CPU scheduling controller 520 may transmit a request for confirming a resources preemption right to a host CPU scheduling proxy 114 to receive, from the host system, resources preemption right confirmation for the virtual machine application of which execution is requested. In this state, the Android CPU scheduling controller 520 may provide the App ID and the Virtual PID to the host CPU scheduling proxy 114 to identify the virtual machine application of which execution is requested.

The Android CPU scheduler 530 may transmit the App ID, the Virtual PID, and the priority to the kernel 130 to provide the resources preemption priority determined with respect to the virtual machine application received from the Android CPU scheduling controller 520, to the kernel.

When receiving the App ID, the Virtual PID, and the priority that are information about a resources preemption right for a virtual machine application received from the host CPU scheduling proxy 114 of the host system 110, the Android CPU scheduler 530 may update scheduling about the virtual machine application by reflecting the information. When scheduling for the virtual machine application is updated, the Android CPU scheduler 530 may provide the update scheduling result to the kernel 130.

An interface 133 of the kernel 130 may receive the App ID, the Virtual PID, and the priority that are information about the resources preemption priority determined with respect to the virtual machine application received from the Android CPU scheduler 530, convert the received information into a format to be understood by the kernel scheduler 131, and then transmit the converted information to the kernel scheduler 131. The kernel scheduler 131 may schedule the CPU to preempt resources based on the priority information about a virtual machine application.

The host system 110 may include the host CPU scheduling proxy 114 and a host scheduling list 600.

When receiving a request for confirming a resources preemption right for a virtual machine application with the App ID and the Virtual PID from the Android CPU scheduling controller 520, the host CPU scheduling proxy 114 may determine, by referring to the host scheduling list 600, a resources preemption right for a virtual machine application.

The host scheduling list 600 may refer a list that contains priority information about resources preemption rights for applications that is referred to when the host CPU scheduling proxy 114 determines the resources preemption rights for applications in the host system 110.

According to an embodiment of the disclosure, the host scheduling list 600 may include resources preemption priority information about one or more applications. For example, the resources preemption priority may be set to be high for applications with high resources preemption necessity, and the resources preemption priority may be set to be low for applications with low resources preemption necessity. The resources preemption priority may be determined between predetermined values. For example, the resources preemption priority may have a value between -20 and +20, and may be set as -20 for applications with high resources preemption necessity, +20 for applications with low resources preemption necessity, and 0 for neutral applications.

According to an embodiment of the disclosure, the host scheduling list may include one or more lists representing lists for one or more applications. For example, the host scheduling list may include a rule-based list for applications with the highest resources preemption necessity, a white list for applications with relatively high resources preemption necessity, and a black list for applications with relatively low resources preemption necessity.

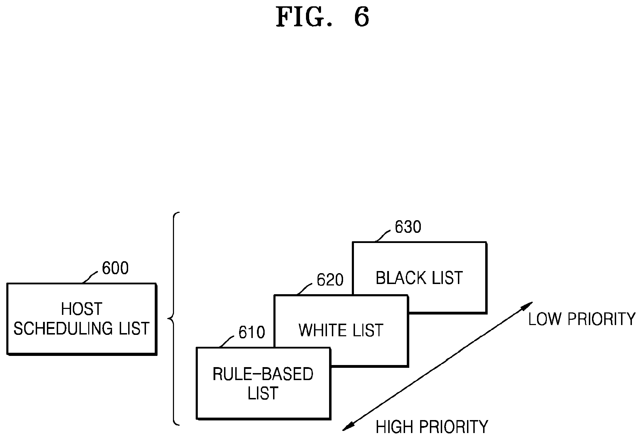

FIG. 6 is a diagram illustrating an example of the host scheduling list 600 according to various embodiments.

Referring to FIG. 6, the host scheduling list 600 may include a rule-based list 610, a white list 620, and a black list 630.

The rule-based list 610 may refer to a list of applications with the top priority for the resources preemption right. For example, a process about essential routines of a system, for example, after power is applied to a computing device, a screen logo is output within a few seconds and then a specific process starts within a few seconds, may be included in the rule-based list 610.

The white list 620 may refer to a list of applications with relatively high priority for the resources preemption right. For example, a process of receiving the request for executing a specific Android application from a user may be included in the white list 620.

The black list 630 may refer to a list of application with the lowest priority for the resources preemption right. For example, as a process of updating software in the background has relatively low necessity for resources preemption, such a process may be included in the black list 630. For example, a process of downloading an Android application from an Android application store (Android system), installing and executing the Android application, and outputting a popup or notification according to the installation and execution may be included in the black list 630.

A priority level may be determined to be a high priority, a medium priority, and a low priority in relation with the resources preemption right corresponding to each list included in the host scheduling list 600.

Alternatively, each list included in the host scheduling list 600 may have a value corresponding to the resources preemption priority. For example, a value corresponding to the resources preemption priority is between -20 and +20, and -20 may be set to applications included in the rule-based list 610 that is a list of applications with high resources preemption necessity, +20 may be set to applications included in the black list 630 that is a list of applications with low resources preemption necessity, and 0 may be set to application included in the white list 620 that is a list of neutral applications.

When determining a resources preemption right for a virtual machine application by referring to the host scheduling list 600, the host CPU scheduling proxy 114 may provide resources preemption right information determined with respect to a virtual machine application to the Android CPU scheduler 530. In this state, to provide the resources preemption right information determined with respect to a virtual machine application, the host CPU scheduling proxy 114 may transmit the App ID, the Virtual PID, and the priority to the Android CPU scheduler 530.

The host CPU scheduling proxy 114 may provide the resources preemption right information determined with respect to a virtual machine application directly to the kernel 130. In order for the host CPU scheduling proxy 114 to provide the resources preemption right information determined with respect to a virtual machine application directly to the kernel 130, it is necessary to know a Real PID corresponding to the virtual machine application. To this end, the host CPU scheduling proxy 114 may obtain a Real PID to a virtual machine application by referring to the host-virtual machine the ID map 132 obtained by the kernel 130 using the App ID and the Virtual PID. In other words, the host CPU scheduling proxy 114 may provide the App ID and the Virtual PID to the kernel 130, and obtain a Real PID and an App ID corresponding to virtual machine application, by referring to the host-virtual machine the ID map 132 owned by the kernel 130. As such, when the Real PID corresponding to a virtual machine application is obtained, the host CPU scheduling proxy 114 may provide, using Real PID, the resources preemption right information determined with respect to a virtual machine application to the kernel scheduler 131. In other words, the host CPU scheduling proxy 114 may transmit the App ID, the Real PID, and the priority to the kernel scheduler 131.

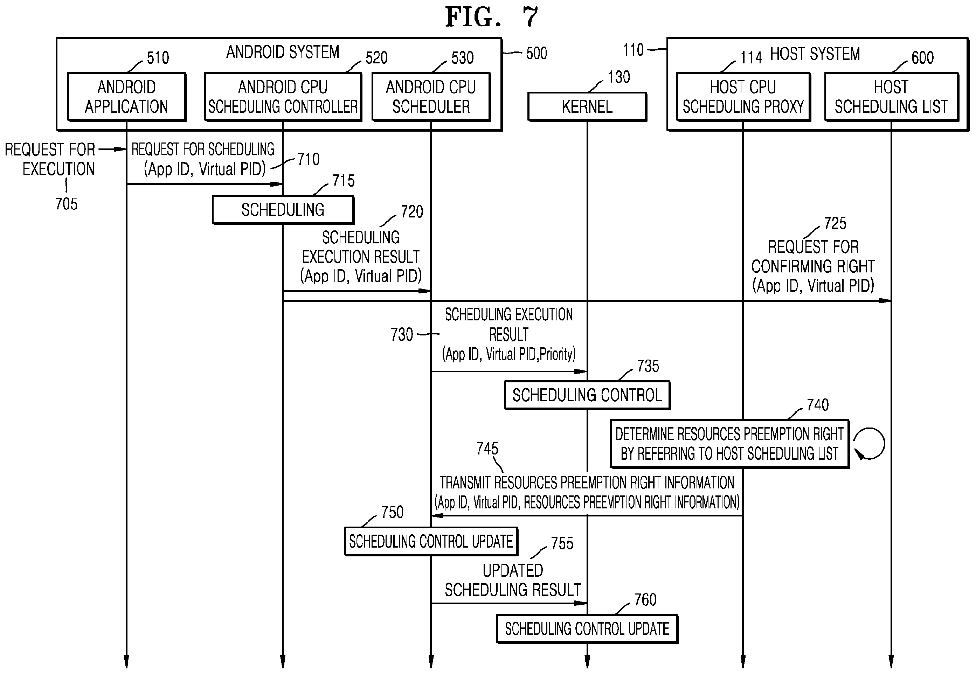

FIG. 7 is a signal flow diagram illustrating an example method of operating a computing device illustrated in FIG. 5, according to various embodiments.

Referring to FIG. 7, in operation 705, the Android system 500 may receive a request for executing the Android application 510.

In operation 710, the Android application 510 may transmit a scheduling request by providing the App ID and the Virtual PID corresponding to the Android application of which execution is requested, to the Android CPU scheduling controller 520.

In operation 715, the Android CPU scheduling controller 520 may perform scheduling by determining a resources preemption priority for the Android application of which scheduling is requested, according to a resources preemption allocation algorithm in the Android system 500.

In operation 720, the Android CPU scheduling controller 520 may transmit the App ID, the Virtual PID, and the priority to the Android CPU scheduler 530, as a scheduling execution result determined with respect to the Android application.

In operation 725, the Android CPU scheduling controller 520 may transmit the App ID and the Virtual PID to the host CPU scheduling proxy 114 of the host system 110 to send the resources preemption right confirmation request for the Android application.

In operation 730, the Android CPU scheduler 530 may transmit the scheduling execution result received from the Android CPU scheduling controller 520, to the kernel 130.

In operation 735, the kernel 130 may perform scheduling control according to the scheduling result received from the Android CPU scheduler 530.

In operation 740, the host CPU scheduling proxy 114 may determine a resources preemption right for Android application by referring to the host scheduling list 600.

In operation 745, the host CPU scheduling proxy 114 may provide resources preemption right information determined with respect to the Android application to the Android CPU scheduler 530. In this state, the host CPU scheduling proxy 114 may transmit the App ID, the Virtual PID, and the resources preemption right information to the Android CPU scheduler 530.

In operation 750, the Android CPU scheduler 530 may update a scheduling result for the Android application based on the resources preemption right information received from the host CPU scheduling proxy 114.

In operation 755, the Android CPU scheduler 530 may provide an updated scheduling result to the kernel 130.

In operation 760, the kernel 130 may receive the updated scheduling result from the Android CPU scheduler 530 and adjust scheduling control according thereto.

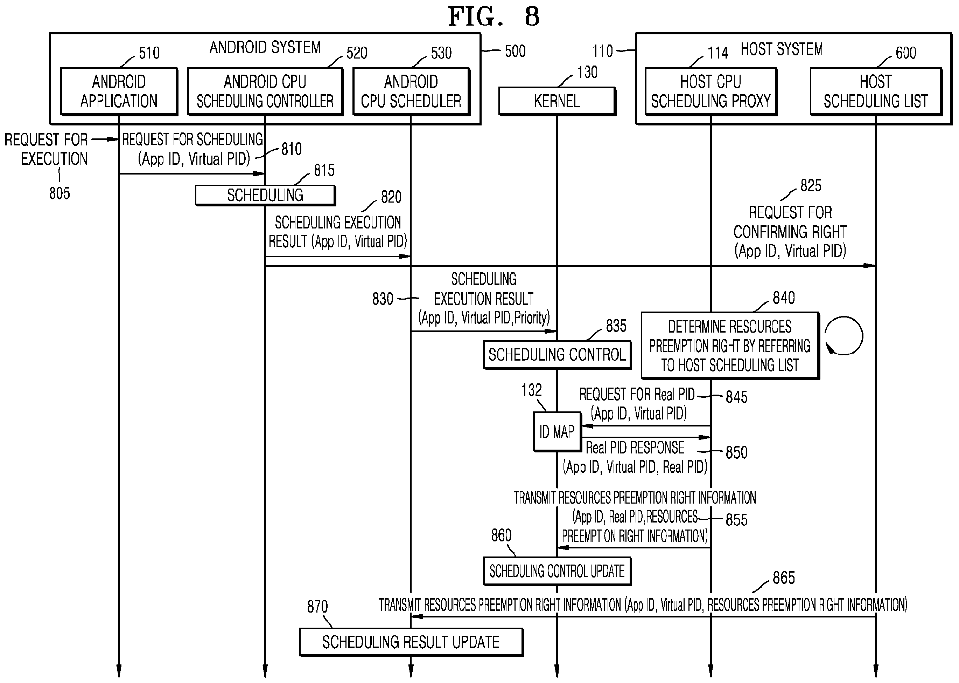

FIG. 8 is a signal flow diagram illustrating an example method of operating a computing device illustrated in FIG. 5, according to various embodiments.

As the configurations from operation 805 to operation 840 in FIG. 8 are the same as or similar to the configurations from operation 705 to operation 740 in FIG. 7, descriptions thereof may not be repeated here.

In operation 845, the host CPU scheduling proxy 114 may transmit a Real PID request corresponding to an Android application to the kernel 130. For the Real PID request, the host CPU scheduling proxy 114 may transmit the App ID and the Virtual PID corresponding to the Android application to the kernel 130.

In operation 850, the kernel 130 may search for a corresponding Real PID using the App ID and the Virtual PID corresponding to the Android application, by referring to an ID map 132, and transmit the App ID, the Virtual PID, and the Real PID to the host CPU scheduling proxy 114, as a response to the Real PID request.

In operation 855, the host CPU scheduling proxy 114 may provide resources preemption right information directly to the kernel 130 using the Real PID. In other words, the host CPU scheduling proxy 114 may transmit the App ID, the Real PID, and the resources preemption right information to the kernel 130.

In operation 860, the kernel 130 may update scheduling control for the corresponding Android application based on the resources preemption right information received from the host CPU scheduling proxy 114.

In operation 865, the host CPU scheduling proxy 114 may transmit the App ID, the Virtual PID, and the resources preemption right information to the Android CPU scheduler 530 to provide the resources preemption right information determined for the Android application to the Android CPU scheduler 530.

In operation 870, the Android CPU scheduler 530 may update a scheduling result for the Android application based on the resources preemption right information received from the host CPU scheduling proxy 114.

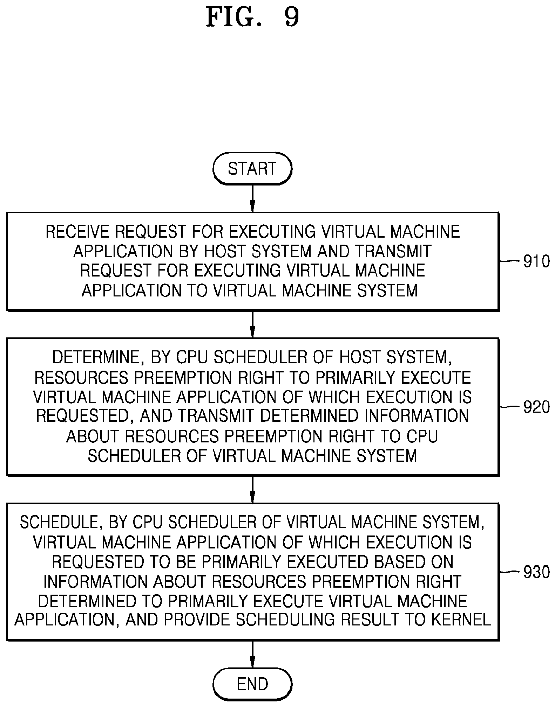

FIG. 9 is a flowchart illustrating an example method of operating a computing device when a host system receives a request for executing a virtual machine application, according to various embodiments.

Referring to FIG. 9, in operation 910, the computing device 100 may receive a request for executing a virtual machine application by the host system, and transmit the request for executing a virtual machine application to a virtual machine system according to the receiving of the request for executing a virtual machine application. For example, the computing device 100 may receive a request for executing a virtual machine application through a host application while the host application is executed by the host system.

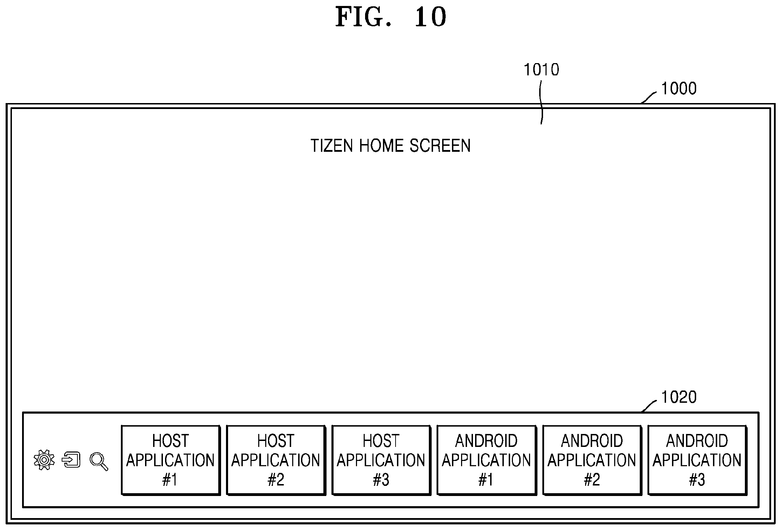

FIG. 10 is a diagram illustrating an example of an environment in which a host system receives a request for executing a virtual machine application, according to various embodiments.

Referring to FIG. 10, the computing device 100 may display a Tizen home screen 1010 on a display 1000 based on a Tizen OS, according to an embodiment of the disclosure.

The Tizen home screen 1010 may provide a menu 1020 including items for execution of one or more applications. The menu 1020 may include not only items for execution of host applications #1, #2, and #3 based on the Tizen OS, but also items for execution of Android applications #1, #2, and #3 based on the Android OS.

When a user input to request the execution of one of the Android applications #1, #2, and #3 is received from the menu 1020 of the Tizen home screen 1010, the computing device 100 may confirm that the host system receives an Android application execution request. When a user input to request the execution of an Android application in the environment as above, which may refer, for example, to a user explicitly requesting the execution of an Android application, the computing device 100 needs to control such that a resources preemption priority for the Android application of which execution is requested is set to be the top so as to be executed without delay.

Referring back to FIG. 9, in operation 920, a resources preemption right to primarily execute a virtual machine application may be determined by a CPU scheduler of a host system, with respect to the virtual machine application of which execution is requested, and the determined information about a resources preemption right may be transmitted to a CPU scheduler of a virtual machine system.

When there is a request for executing a virtual machine application in a host system environment, the CPU scheduler of a host system may recognize that this is an application that needs to be dealt with the top priority. Accordingly, when there is a request for executing a virtual machine application in the host system environment, the CPU scheduler of a host system may set the resources preemption right of the virtual machine application of which execution is requested to be the top.

The CPU scheduler of a host system may determine a resources preemption right such that the virtual machine application of which execution is requested is primarily executed, and transmit the determined information about a resources preemption right to the CPU scheduler of a virtual machine system.

In operation 930, by the CPU scheduler of a virtual machine system, based on the information about a resources preemption right determined to primarily execute the virtual machine application, the virtual machine application of which execution is requested may be scheduled to be primarily executed and a scheduling result may be provided to the kernel.

For the virtual machine application of which execution is requested, by explicitly receiving the resources preemption right information to primarily execute the virtual machine application from the CPU scheduler of a host system, the CPU scheduler of a virtual machine system may schedule such that the virtual machine application is primarily executed. As such, by providing a scheduling result determined to primarily execute the virtual machine application to the kernel, the kernel may schedule such that resources are preempted by the virtual machine application.

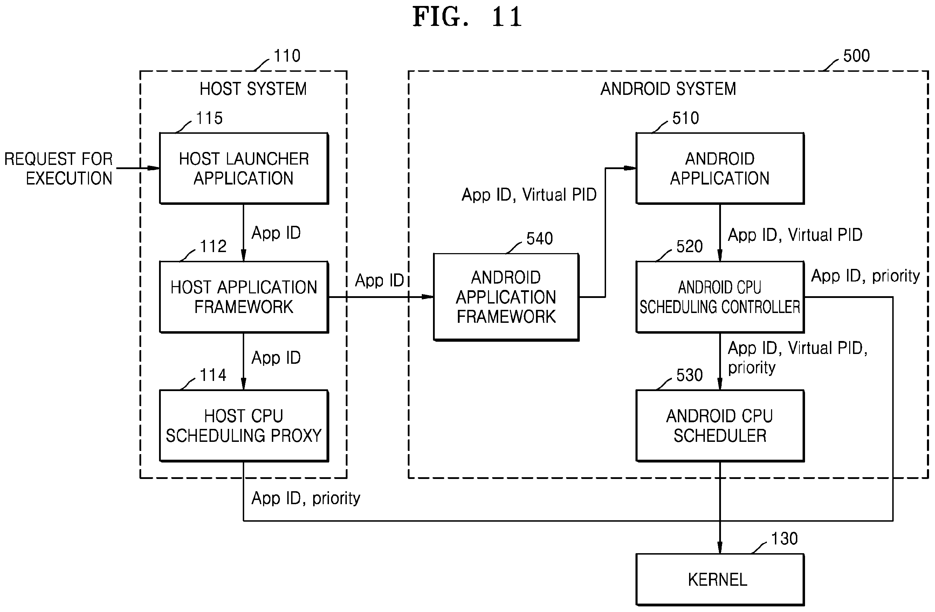

FIG. 11 is a block diagram illustrating an example configuration of a computing device including an Android system, which is an example of a virtual machine system, according to various embodiments.

Referring to FIG. 11, the computing device 100 According to an embodiment of the disclosure, may include the Android system 500, the host system 110, and the kernel 130.

According to an embodiment of the disclosure, the host system 110 may include a host launcher application 115, the host application framework 112, and the host CPU scheduling proxy 114.

The host launcher application 115, when receiving a request for executing an Android application, may transmit the App ID of the Android application of which execution is requested, to the host application framework 112.

The host application framework 112 may transmit the App ID and the request for executing the Android application of which execution is requested, to an Android application framework 540 of the Android system and the host CPU scheduling proxy 114.

The host CPU scheduling proxy 114 that received the App ID from the host application framework 112 may determine a resources preemption priority for the virtual machine application of which execution request is received by the host system to be the top priority so that the virtual machine application is primarily executed. The host application framework 112 may provide the resources preemption priority information about the Android application to the Android CPU scheduling controller 520 of the Android system 500 so that the Android application is scheduled according to the determined priority as above. In this state, the host CPU scheduling proxy 114 may transmit the App ID and the priority to the Android CPU scheduling controller 520 to provide the resources preemption priority information about the Android application.

The Android system 500 may include the Android application 510, the Android CPU scheduling controller 520, the Android CPU scheduler 530, and the Android application framework 540.

The Android application framework 540 may receive the App ID and the request for executing the Android application of which an execution request is received by the host system 110, from the host application framework 112, and provide a request for executing the corresponding Android application, with the received App ID and a Virtual PID corresponding to the App ID, to the Android application 510.

The Android application 510 may provide the execution request with the received App ID and Virtual PID, to the Android CPU scheduling controller 520.

The Android CPU scheduling controller 520 may determine a resources preemption priority for the Android application of which execution is requested, based on the App ID and the resources preemption priority information received from the host CPU scheduling proxy 114, and provide the determined resources preemption priority information to the Android CPU scheduler 530. In this state, the Android CPU scheduling controller 520 may transmit the App ID, the Virtual PID, and the priority of the Android application of which execution is requested, to the Android CPU scheduler 530.

The Android CPU scheduler 530 may provide the resources preemption priority information about the Android application received from the Android CPU scheduling controller 520, to the kernel 130.

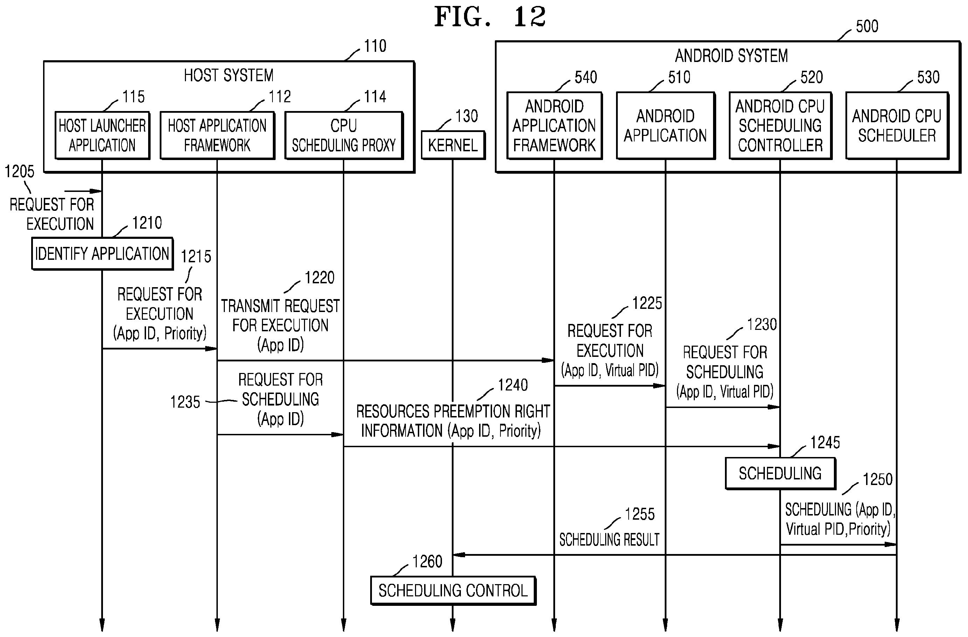

FIG. 12 is a signal flow diagram illustrating an example method of operating a computing device illustrated in FIG. 11, according to various embodiments.

Referring to FIG. 12, in operation 1205, the host launcher application 115 of the host system 110 may receive a request for executing an Android application.

In operation 1210, the host launcher application 115 may confirm that the application is an Android application by referring to the attributes information of the Android application of which execution is requested.

In operation 1215, the host launcher application 115 may transmit the request for executing an Android application with the App ID to the host application framework 112.

In operation 1220, the host application framework 112 that received the request for executing an Android application may transmit the request for executing the Android application with the App ID to the Android application framework 540 of the Android system 500.

In operation 1225, the Android application framework 540 that received the request for executing an Android application may transmit the request for executing an Android application with the App ID and the Virtual PID to the Android application 510.

In operation 1230, the Android application 510 may transmit a scheduling request for the Android application of which execution is requested with the App ID and the Virtual PID, to the Android CPU scheduling controller 520.

In operation 1235, the host application framework 112 may transmit the scheduling request for the Android application of which execution is requested, with the App ID, to the host CPU scheduling proxy 114.

In operation 1240, the host CPU scheduling proxy 114 may determine a resources preemption right for the Android application of which execution is requested, and transmit the App ID of the Android application and the determined information about a resources preemption right to the host CPU scheduling controller 520 of the host system 500. In this state, the host CPU scheduling proxy 114 may recognize that the Android application of which execution is requested is an application according to a user's execution request in the host system 500 and to be executed by preempting resources, and determine a resources preemption right for the Android application of which execution is requested, to be the top priority.

In operation 1245, the Android CPU scheduling controller 520 that received the scheduling request for the Android application and the resources preemption right for Android application information may determine and schedule priority based on the received resources preemption right information for the Android application of which scheduling is requested.

In operation 1250, the Android CPU scheduling controller 520 may transmit a scheduling result to the Android CPU scheduler 530. In this state, to transmit the scheduling result, the Android CPU scheduling controller 520 may provide the App ID, the Virtual PID, and the scheduling priority information to the Android CPU scheduler 530.

In operation 1255, the Android CPU scheduler 530 that received the scheduling priority information about the Android application from the Android CPU scheduling controller 520 may provide the App ID, the Virtual PID, and the scheduling priority information, as the scheduling result, to the kernel 130.

In operation 1260, the kernel 130 may receive the scheduling result for the Android application of which execution is requested, and schedule resources preemption for the Android application of which execution is requested, based on the scheduling result.

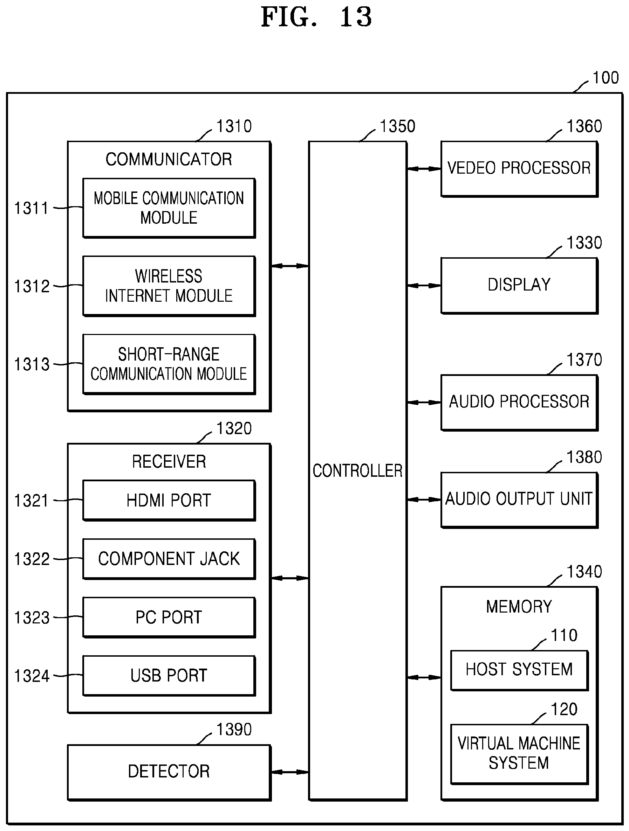

FIG. 13 is a block diagram illustrating an example configuration of a computing device according to various embodiments.

Referring to FIG. 13, the computing device 100 may include a video processor (e.g., including video processing circuitry) 1360, an audio processor (e.g., including audio processing circuitry) 1370, an audio output unit (e.g., including a speaker) 1380, and a detector (e.g., comprising circuitry) 1390, in addition to a communicator (e.g., including communication circuitry) 1310, a receiver 1320, a display 1330, a memory 1340, and a controller (e.g., including processing circuitry) 1350.

The communicator 1310 may include one or more modules including various communication circuitry capable of wireless communication between the computing device 100 and a wireless communication system or between the computing device 100 and a network in which another electronic device is located. For example, the communicator 1310 may include a mobile communication module 1311, a wireless Internet module 1312, and a short-range communication module 1313.

The mobile communication module 1311 may include various communication circuitry and transceive wireless signals with respect to at least one of a base station, an external terminal, or a server on a mobile communication network. The wireless signals may include various types of data according to the transceiving of voice call signals, video call signals, or text/multimedia messages.

The wireless Internet module 1312 refers to a module including various circuitry for a wireless Internet connection and may be provided inside a device or outside the device. As a wireless Internet technology, wireless LAN (WLAN), WiFi, wireless broadband (Wibro), World Interoperability for Microwave Access (Wimax), High Speed Downlink Packet Access (HSDPA), and the like may be used. The device may have a Wi-Fi peer-to-peer (P2P) connection with another device through the wireless Internet module 1312.

The short-range communication module 1313 refers to a module including various circuitry for a short-range communication. As a short-range communication technology, Bluetooth, Bluetooth Low Energy (BLE), Radio Frequency Identification (RFID), an infrared communication such as Infrared Data Association (IrDA), Ultra Wideband (UWB), ZigBee, and the like may be used.

The receiver 1320 may, under the control of the controller 1350, receive video (e.g., moving picture and the like), audio, (e.g., voice, music, and the like), additional information (e.g., EPG and the like), and the like from the outside of the computing device 100. The receiver 1320 may include one of a HDMI (High-Definition Multimedia Interface) port 1321, a component jack 1322, a PC port 1323, and a USB port 1324, or one or more combinations thereof. The receiver 1320 may further include a display port (DP), Thunderbolt, or Mobile High-Definition Link (MHL), in addition to the HDMI port 1321.

The video processor 1360 may include various video processing circuitry and, under the control of the controller 1350, process image signals received from the receiver 1320 or the communicator 1310 and output the same to the display 1330.

The display 1330 may display image signals received from the video processor1360 on a screen .

The audio processor 1370 may include various audio processing circuitry and, under the control of the controller 1350, convert audio signals received from the receiver 1320 or the communicator 1310 into analog audio signals and output the same to the audio output unit 1380.

The audio output unit 1380 may output the received analog audio signals through, for example, a speaker (not shown).

The detector 1390 may include various circuitry and detects user's voice, user's image, or user's interaction, and include a microphone, a camera unit, and a light receiver. The microphone receives voices uttered by a user. The microphone may convert receives voice into electrical signals and output the same to the controller 1350. The camera unit may receive an image (e.g., continuous frames) corresponding to a motion of a user including gesture within a recognition range of a camera. The light receiver may receive light signals including control signals received from a remote control device. The light receiver may receive light signals corresponding to a user input (e.g., touch, press, touch gesture, voice, or motion) from the remote control device.

The memory 1340 may store programs related to the operation of the computing device 100 and various pieces of data generated during the operation of the computing device 100.

According to an embodiment of the disclosure, when instructions included in the memory 1340 are executed by the computing device 100, the computing device 100 may perform operations of receiving, by the virtual machine system, a request for executing a virtual machine application, by a CPU scheduler of a virtual machine system, scheduling the virtual machine application of which execution is requested to be primarily executed, providing a scheduling result to a kernel, and transmitting a request for confirming a resources preemption right for the virtual machine application to the host system CPU scheduler, and, by the host system CPU scheduler, determining a resources preemption right of the virtual machine application by referring to a host scheduling list, and providing information about the determined resources preemption right to a CPU scheduler of a virtual machine system.

According to an embodiment of the disclosure, the information about a resources preemption right may include priority of a resources preemption right of the virtual machine application.

According to an embodiment of the disclosure, when the instructions included in the memory 1340 are executed by the computing device 100, the computing device 100 may further perform an operation of, by the CPU scheduler of a virtual machine system, providing the information about a resources preemption right to the kernel and adjusting primary execution scheduling for the virtual machine application, when the information about a resources preemption right represents a resources preemption rejection.

According to an embodiment of the disclosure, the host scheduling list may include priority information of each of one or more applications.

According to an embodiment of the disclosure, the host scheduling list may include at least one of a rule-based list including identification information about one or more applications to be executed with the top priority, a white list including identification information about one or more applications to be primarily executed, or a black list including identification information about one or more applications not to be primarily executed.

According to an embodiment of the disclosure, when the instructions included in the memory 1340 are executed by the computing device 100, the computing device 100 may further perform, by the host system CPU scheduler 113, an operation of confirming a Real PID corresponding to an application ID of the virtual machine application using an ID map of the kernel, when the resources preemption right confirmation request for a virtual machine application is received from the CPU scheduler of a virtual machine system, and an operation of adjusting resources preemption scheduling for the virtual machine application by providing the determined information about a resources preemption right for the virtual machine application to the kernel, using the Real PID of the virtual machine application.

According to an embodiment of the disclosure, the ID map of the kernel may include an App ID, a Virtual PID, a Real PID, and a resources preemption priority information of an application.

According to an embodiment of the disclosure, when the instructions included in the memory 1340 are executed by the computing device 100, the computing device 100 may perform an operation of, based on receiving, by the host system, a request for executing a virtual machine application, transmitting the request for executing a virtual machine application to the virtual machine system, the host system CPU scheduler 113, determining a resources preemption right to primarily execute the virtual machine application of which execution is requested, and transmitting information about the determined resources preemption right to the CPU scheduler of a virtual machine system, and by the CPU scheduler of a virtual machine system, based on the information about a resources preemption right determined to primarily execute the virtual machine application, scheduling the virtual machine application of which execution is requested to be primarily executed, and providing a scheduling result to the kernel.

An embodiment of the disclosure may be implemented in the form of a recoding medium including computer executable instructions, such as a program module executed by a computer. A non-transitory computer-readable storage medium may be a useable medium that is accessible by a computer and may include all of volatile and non-volatile media and separable and inseparable media. Furthermore, the computer-readable medium may include all of computer storage media and communication media. The computer storage media may include all of volatile and non-volatile media and separable and inseparable media, which are embodied by a certain method or technology for storing information such as computer-readable instructions, data structures, program modules, or other data.

The various example embodiments may be implemented as a S/W program including instructions stored in a computer-readable storage media.

A computer is a device capable of calling instructions stored from a storage medium and performing an operation according to the disclosed embodiment according to the called instructions, and may include an electronic device according to the disclosed embodiments.

A computer-readable storage medium may be provided in the form of a non-transitory storage medium. The non-transitory may refer, for example, to a storage medium being a tangible device, not including a signal, for example, an electromagnetic wave. However, the term does not distinguish a case of semi-permanently storing data in a storage medium from a case of temporarily storing data.

Furthermore, a control method according to the disclosed embodiments be provided by being included in a computer program product. A computer program product as goods may be dealt between a seller and a buyer.

A computer program product may include a S/W program and a computer-readable storage medium where the S/W program is stored. For example, a computer program product may include a product in the form of a S/W program, for example, a downloadable application, that is electronically distributed through a manufacturer of a broadcast receiving device or an electronic market, for example, Google PlayStore or AppStore. For electronic distribution, at least part of a S/W program may be stored in a storage medium or temporarily generated. In this case, a storage medium may be a manufacturer's server, an electronic market's server, or a storage medium of a relay server that temporarily stores a SW program.

A computer program product may include a server's storage medium or a client device's storage medium in a system including a server and a client device. Alternatively, when there is a third device, for example, a smartphone, communicatively connected to a server or a client device, the computer program product may include a storage medium of the third device. Alternatively, a computer program product may include a S/W program that is transmitted from a server to a client device or a third device, or from the third device to the client device.

In this case, server, any one of the client device and the third device may perform a method according to the disclosed embodiments by executing the computer program product. Alternatively, two or more of the server, the client device, and the third device may perform, in a distribution manner, the method according to the disclosed embodiments by executing the computer program product.

For example, a server, for example, a cloud server or an artificial intelligent server, and the like, executes a computer program product stored in the server, so that the client device communicatively connected to the server may be controlled to perform the method according to the disclosed embodiments.

As another example, a third device executes a computer program product, so that a terminal connected to communication with the third device may control to perform the method according to the disclosed embodiment When the third device executes the computer program product, the third device may download the computer program product from the server, and execute the downloaded computer program product. Alternatively, the third device may execute the computer program product provided in a preloaded state to perform the method according to the disclosed embodiments.

Furthermore, in the disclosure, a "unit" may include a hardware component, such as a processor or a circuit, and/or a software component executed by the hardware component such as a process.

The above descriptions of the disclosure is for an example, and it will be understood that one of ordinary skill in the art to which the disclosure pertains can easily modify the disclosure into other detailed form without changing the technical concept or essential features of the disclosure. Thus, the above-described embodiments are merely examples in all aspects and should not be for purposes of limitation. For example, each element described to be a single type may be embodied in a distributive manner. Likewise, the elements described to be distributed may be embodied in a combined form.

The scope of the present disclosure is defined by the claims set forth below rather than the foregoing detailed description.

## Claims

1. A method of operating a computing system including a host system and a virtual machine system, the method comprising:
receiving (301), by the virtual machine system, a request for executing a virtual machine application;
the method **characterized by**:
by a central processing unit, CPU, scheduler of a virtual machine system, scheduling (302) the virtual machine application for which execution is requested to be primarily executed, providing (303) a result of the scheduling to a kernel configured to perform scheduling control (304) with respect to the virtual machine application according to the scheduling result, and transmitting (305) a request for confirming a resources preemption right for the virtual machine application to a CPU scheduler of the host system;
based on receiving, by the CPU scheduler of the host system, the request for confirming the resources preemption right for the virtual machine application, determining (306) a resources preemption right of the virtual machine application by referring to a host scheduling list, and providing (307) information about the determined resources preemption right to the CPU scheduler of the virtual machine system;
based on receiving, by the CPU scheduler of the virtual machine system, the information about the resources preemption right determined with respect to the virtual machine application, updating (308) a scheduling result for the virtual machine application based on the information about the resources preemption right received from the host system, and
transmitting (309), by the CPU scheduler of the virtual machine system to the kernel, an updated scheduling result according to the scheduling result for the virtual machine application, based on the information about the resources preemption right received from the host system, wherein the kernel is configured to update (310) the scheduling control based on the updated scheduling result,
wherein the host scheduling list contains priority information about applications, which is used to determine the resources preemption right for the applications by the CPU scheduler of the host system, and wherein the priority information is settable to high for applications with high resources preemption necessity, and the resources preemption priority is settable to low for applications with low resources preemption necessity.

2. The method of claim 1, further comprising, based on the information about the resources preemption right representing a resources preemption rejection, providing (409), by the CPU scheduler of the virtual machine system, the information about the resources preemption right to the kernel and adjusting (410) primary execution scheduling for the virtual machine application.

3. The method of claim 1, wherein the host scheduling list includes at least one of a rule-based list including identification information about one or more applications to be executed with a top priority, a white list including identification information about one or more applications to be primarily executed, or a black list including identification information about one or more applications not to be primarily executed.

4. The method of claim 1, further comprising:
by the CPU scheduler of the host system,
based on the resources preemption right confirmation request for a virtual machine application being received from the CPU scheduler of the virtual machine system, confirming (407) a Real process identifier, PID, corresponding to an application ID of the virtual machine application using an ID map of the kernel, and
adjusting (410) resources preemption scheduling for the virtual machine application by providing the determined information about a resources preemption right for the virtual machine application to the kernel, using the Real PID of the virtual machine application.

5. The method of claim 4, wherein the ID map of the kernel includes an application ID, App ID, a Virtual Process Identifier, PID, a Real PID, and resources preemption priority information of an application.

6. A method of operating a computing system including a host system and a virtual machine system, the method **characterised by**:
based on receiving, by the host system, a request for executing a virtual machine application, transmitting the request for executing the virtual machine application to the virtual machine system,
based on receiving, by a central processing unit, CPU, scheduler of the host system, the request for confirming the resources preemption right for executing the virtual machine application, determining (306) a resources preemption right to primarily execute the virtual machine application for which execution is requested by referring to a host scheduling list, and transmitting (307) information about the determined resources preemption right to a CPU scheduler of the virtual machine system, and
by the CPU scheduler of the virtual machine system, based on the information about a resources preemption right determined to primarily execute the virtual machine application, scheduling (308) the virtual machine application for which execution is requested to be primarily executed, and providing (309) a result of the scheduling to a kernel configured to update (310) the scheduling control based on the scheduling result,
wherein the host scheduling list contains priority information about applications, which is used to determine the resources preemption right for the applications by the CPU scheduler of the host system, and wherein the priority information is settable to high for applications with high resources preemption necessity, and the resources preemption priority is settable to low for applications with low resources preemption necessity.

7. A computing device (100) comprising:
a host system (110);
a virtual machine system (120);
one or more central processing units, CPUs (141); and
a memory (142) storing instructions,
wherein, based on the instructions being executed by the computing device, the computing device is configured to:
receive, by the virtual machine system (120), a request for executing a virtual machine application (121);
**characterized in that** the computing device is configured to:
by a CPU scheduler (123) of the virtual machine system, schedule the virtual machine application (121) for which execution is requested to be primarily executed, provide a result of the scheduling to a kernel (130) configured to perform scheduling control (304) with respect to the virtual machine application according to the scheduling result, and transmit a request for confirming a resources preemption right for the virtual machine application to a CPU scheduler (113) of the host system;
based on receiving, by the CPU scheduler (113) of the host system, the request confirming the resources preemption right for the virtual machine application, determine a resources preemption right of the virtual machine application (121) by referring to a host scheduling list, and provide information about the determined resources preemption right to the CPU scheduler (123) of the virtual machine system;
based on receiving, by the CPU scheduler (123) of the virtual machine system, the information about the resources preemption right determined with respect to the virtual machine application (121), update a scheduling result for the virtual machine application based on the information about the resources preemption right received from the host system (110), and
transmit, by the CPU scheduler (123) of the virtual machine system to the kernel (130), an updated scheduling result according to the scheduling result for the virtual machine application (121), based on the information about the resources preemption right received from the host system (110), wherein the kernel is configured to update the scheduling control based on the updated scheduling result,
wherein the host scheduling list contains priority information about applications, which is used to determine the resources preemption right for the applications by the CPU scheduler of the host system, and wherein the priority information is settable to high for applications with high resources preemption necessity, and the resources preemption priority is settable to low for applications with low resources preemption necessity.

8. The computing device of claim 7, wherein, based on the instructions being executed by the computing device (100), the computing device is further configured to: based on the information about the resources preemption right representing a resources preemption rejection, provide, by the CPU scheduler (123) of the virtual machine system (120), the information about the resources preemption right to the kernel (130) and adjust primary execution scheduling for the virtual machine application (121).

9. The computing device of claim 7, wherein the host scheduling list includes at least one of a rule-based list including identification information about one or more applications to be executed with the top priority, a white list including identification information about one or more applications to be primarily executed, or a black list including identification information about one or more applications not to be primarily executed.

10. The computing device of claim 9, wherein, based on the instructions being executed by the computing device, the computing device (100) is further configured to:
by the CPU scheduler (113) of the host system (110),
based on the resources preemption right confirmation request for a virtual machine application (121) being received from the CPU scheduler (123) of the virtual machine system (120), confirm a Real process identifier, PID, corresponding to an application ID of the virtual machine application using an ID map of the kernel (130), and
adjust resources preemption scheduling for the virtual machine application (121) by providing the determined information about the resources preemption right for the virtual machine application to the kernel (130), using the Real PID of the virtual machine application.

11. A computing device (100) comprising:
a host system (110);
a virtual machine system (120);
one or more central processing units, CPUs (141); and
a memory (142) storing instructions,
the computing device **characterized in that**, based on the instructions being executed by the computing device, the computing device is configured to:
based on receiving, by the host system, a request for executing a virtual machine application, transmit the request for executing the virtual machine application to the virtual machine system;
based on receiving, by a CPU scheduler (113) of the host system (110), the request for confirming the resources preemption right for executing a virtual machine application (121), determine a resources preemption right to primarily execute the virtual machine application for which execution is requested by referring to a host scheduling list, and transmit information about the determined resources preemption right to a CPU scheduler (123) of the virtual machine system; and
based on the information about the resources preemption right determined to primarily execute the virtual machine application, by the CPU scheduler of the virtual machine system, schedule the virtual machine application for which execution is requested to be primarily executed, and provide a result of the scheduling to a kernel (130) configured to update the scheduling control based on the scheduling result,
wherein the host scheduling list contains priority information about applications, which is used to determine the resources preemption right for the applications by the CPU scheduler of the host system, and wherein the priority information is settable to high for applications with high resources preemption necessity, and the resources preemption priority is settable to low for applications with low resources preemption necessity.

## Patentansprüche

1. Verfahren zum Betreiben eines Rechnersystems, das ein Host-System und ein virtuelles Maschinensystem beinhaltet, wobei das Verfahren Folgendes umfasst:
Empfangen (301), durch das virtuelle Maschinensystem, einer Anforderung zum Ausführen einer virtuellen Maschinenanwendung;
wobei das Verfahren durch Folgendes **gekennzeichnet ist:**
**durch** einen Planer einer zentralen Verarbeitungseinheit, CPU, eines virtuellen Maschinensystems, Planen (302) der virtuellen Maschinenanwendung, für die Ausführung angefordert wird, primär ausgeführt zu werden, Bereitstellen (303) eines Ergebnisses des Planens an einen Kern, der dazu konfiguriert ist, Planungssteuerung (304) in Bezug auf die virtuelle Maschinenanwendung gemäß dem Planungsergebnis durchzuführen, und Übertragen (305) einer Anforderung zum Bestätigen eines Ressourcenvorkaufsrechts für die virtuelle Maschinenanwendung an einen CPU-Planer des Host-Systems;
basierend auf dem Empfangen, durch den CPU-Planer des Host-Systems, der Anforderung zum Bestätigen des Ressourcenvorkaufsrechts für die virtuelle Maschinenanwendung, Bestimmen (306) eines Ressourcenvorkaufsrechts der virtuellen Maschinenanwendung durch Bezugnahme auf eine Host-Planungsliste, und Bereitstellen (307) von Informationen über das bestimmte Ressourcenvorkaufsrecht an den CPU-Planer des virtuellen Maschinensystems;
basierend auf dem Empfangen, durch den CPU-Planer des virtuellen Maschinensystems, der Informationen über das Ressourcenvorkaufsrecht, das in Bezug auf die virtuelle Maschinenanwendung bestimmt wird, Aktualisieren (308) eines Planungsergebnisses für die virtuelle Maschinenanwendung basierend auf den Informationen über das Ressourcenvorkaufsrecht, die von dem Host-System empfangen werden, und
Übertragen (309), durch den CPU-Planer des virtuellen Maschinensystems an den Kern, eines aktualisierten Planungsergebnisses gemäß dem Planungsergebnis für die virtuelle Maschinenanwendung, basierend auf den Informationen über das Ressourcenvorkaufsrecht, die von dem Host-System empfangen werden, wobei der Kern dazu konfiguriert ist, die Planungssteuerung basierend auf dem aktualisierten Planungsergebnis zu aktualisieren (310),
wobei die Host-Planungsliste Prioritätsinformationen über Anwendungen enthält, die verwendet werden, um das Ressourcenvorkaufsrecht für die Anwendungen durch den CPU-Planer des Host-Systems zu bestimmen, und wobei die Prioritätsinformationen für Anwendungen mit hoher Ressourcenvorkaufsnotwendigkeit auf hoch einstellbar sind und die Ressourcenvorkaufspriorität für Anwendungen mit niedriger Ressourcenvorkaufsnotwendigkeit auf niedrig einstellbar ist.

2. Verfahren nach Anspruch 1, ferner umfassend, basierend darauf, dass die Informationen über das Ressourcenvorkaufsrecht eine Ressourcenvorkaufsablehnung darstellen, Bereitstellen (409), durch den CPU-Planer des virtuellen Maschinensystems, der Informationen über das Ressourcenvorkaufsrecht an den Kern und Einstellen (410) von primärer Ausführungsplanung für die virtuelle Maschinenanwendung.

3. Verfahren nach Anspruch 1, wobei die Host-Planungsliste zumindest eines von einer regelbasierten Liste, die Identifikationsinformationen über eine oder mehrere Anwendungen beinhaltet, die mit einer höchsten Priorität auszuführen sind, einer weißen Liste, die Identifikationsinformationen über eine oder mehrere Anwendungen beinhaltet, die primär auszuführen sind, oder einer schwarzen Liste, die Identifikationsinformationen über eine oder mehrere Anwendungen beinhaltet, die nicht primär auszuführen sind, beinhaltet.

4. Verfahren nach Anspruch 1, ferner umfassend:
durch den CPU-Planer des Host-Systems,
basierend darauf, dass die Ressourcenvorkaufsrecht-Bestätigungsanforderung für eine virtuelle Maschinenanwendung von dem CPU-Planer des virtuellen Maschinensystems empfangen wird, Bestätigen (407) einer realen Prozesskennung, PID, entsprechend einer Anwendungs-ID der virtuellen Maschinenanwendung unter Verwendung einer ID-Zuordnung des Kerns, und
Einstellen (410) von Ressourcenvorkaufsplanung für die virtuelle Maschinenanwendung durch Bereitstellen der bestimmten Informationen über ein Ressourcenvorkaufsrecht für die virtuelle Maschinenanwendung an den Kern unter Verwendung der realen PID der virtuellen Maschinenanwendung.

5. Verfahren nach Anspruch 4, wobei die ID-Zuordnung des Kerns eine Anwendungs-ID, App-ID, eine virtuelle Prozesskennung, PID, eine reale PID und Ressourcenvorkaufsprioritätsinformationen einer Anwendung beinhaltet.

6. Verfahren zum Betreiben eines Rechnersystems, das ein Host-System und ein virtuelles Maschinensystem beinhaltet, wobei das Verfahren durch Folgendes gekennzeichnet ist:
basierend auf dem Empfangen, durch das Host-System, einer Anforderung zum Ausführen einer virtuellen Maschinenanwendung, Übertragen der Anforderung zum Ausführen der virtuellen Maschinenanwendung an das virtuelle Maschinensystem,
basierend auf dem Empfangen, durch einen Planer einer zentralen Verarbeitungseinheit, CPU, des Host-Systems, der Anforderung zum Bestätigen des Ressourcenvorkaufsrechts zum Ausführen der virtuellen Maschinenanwendung, Bestimmen (306) eines Ressourcenvorkaufsrechts, um die Maschinenanwendung, für die Ausführung durch Bezugnahme auf eine Host-Planungsliste angefordert wird, primär auszuführen, und Übertragen (307) von Informationen über das bestimmte Ressourcenvorkaufsrecht an einen CPU-Planer des virtuellen Maschinensystems, und
durch den CPU-Planer des virtuellen Maschinensystems, basierend auf den Informationen über ein Ressourcenvorkaufsrecht, das dazu bestimmt ist, die virtuelle Maschinenanwendung primär auszuführen, Planen (308) der virtuellen Maschinenanwendung, für die Ausführung angefordert wird, primär ausgeführt zu werden, und Bereitstellen (309) eines Ergebnisses des Planens an einen Kern, der dazu konfiguriert ist, die Planungssteuerung basierend auf dem Planungsergebnis zu aktualisieren (310),
wobei die Host-Planungsliste Prioritätsinformationen über Anwendungen enthält, die verwendet werden, um das Ressourcenvorkaufsrecht für die Anwendungen durch den CPU-Planer des Host-Systems zu bestimmen, und wobei die Prioritätsinformationen für Anwendungen mit hoher Ressourcenvorkaufsnotwendigkeit auf hoch einstellbar sind und die Ressourcenvorkaufspriorität für Anwendungen mit niedriger Ressourcenvorkaufsnotwendigkeit auf niedrig einstellbar ist.

7. Rechnervorrichtung (100), umfassend:
ein Host-System (110);
ein virtuelles Maschinensystem (120);
eine oder mehrere zentrale Verarbeitungseinheiten, CPUs (141); und
einen Speicher (142), der Anweisungen speichert,
wobei basierend darauf, dass die Anweisungen durch die Rechnervorrichtung ausgeführt werden, die Rechnervorrichtung zu Folgendem konfiguriert ist:
Empfangen, durch das virtuelle Maschinensystem (120), einer Anforderung zum Ausführen einer virtuellen Maschinenanwendung (121);
**dadurch gekennzeichnet, dass** die Rechnervorrichtung zu Folgendem konfiguriert ist:
durch einen CPU-Planer (123) des virtuellen Maschinensystems, Planen der virtuellen Maschinenanwendung (121), für die Ausführung angefordert wird, primär ausgeführt zu werden, Bereitstellen eines Ergebnisses des Planens an einen Kern (130), der dazu konfiguriert ist, Planungssteuerung (304) in Bezug auf die virtuelle Maschinenanwendung gemäß dem Planungsergebnis durchzuführen, und Übertragen einer Anforderung zum Bestätigen eines Ressourcenvorkaufsrechts für die virtuelle Maschinenanwendung an einen CPU-Planer (113) des Host-Systems;
basierend auf dem Empfangen, durch den CPU-Planer (113) des Host-Systems, der Anforderung, die das Ressourcenvorkaufsrecht für die virtuelle Maschinenanwendung bestätigt, Bestimmen eines Ressourcenvorkaufsrechts der virtuellen Maschinenanwendung (121) durch Bezugnahme auf eine Host-Planungsliste, und Bereitstellen von Informationen über das bestimmte Ressourcenvorkaufsrecht an den CPU-Planer (123) des virtuellen Maschinensystems;
basierend auf dem Empfangen, durch den CPU-Planer (123) des virtuellen Maschinensystems, der Informationen über das Ressourcenvorkaufsrecht, das in Bezug auf die virtuelle Maschinenanwendung (121) bestimmt wird, Aktualisieren eines Planungsergebnisses für die virtuelle Maschinenanwendung basierend auf den Informationen über das Ressourcenvorkaufsrecht, die von dem Host-System (110) empfangen werden, und
Übertragen, durch den CPU-Planer (123) des virtuellen Maschinensystems an den Kern (130), eines aktualisierten Planungsergebnisses gemäß dem Planungsergebnis für die virtuelle Maschinenanwendung (121), basierend auf den Informationen über das Ressourcenvorkaufsrecht, die von dem Host-System (110) empfangen werden, wobei der Kern dazu konfiguriert ist, die Planungssteuerung basierend auf dem aktualisierten Planungsergebnis zu aktualisieren,
wobei die Host-Planungsliste Prioritätsinformationen über Anwendungen enthält, die verwendet werden, um das Ressourcenvorkaufsrecht für die Anwendungen durch den CPU-Planer des Host-Systems zu bestimmen, und wobei die Prioritätsinformationen für Anwendungen mit hoher Ressourcenvorkaufsnotwendigkeit auf hoch einstellbar sind und die Ressourcenvorkaufspriorität für Anwendungen mit niedriger Ressourcenvorkaufsnotwendigkeit auf niedrig einstellbar ist.

8. Rechnervorrichtung nach Anspruch 7, wobei, basierend darauf, dass die Anweisungen durch die Rechnervorrichtung (100) ausgeführt werden, die Rechnervorrichtung ferner zu Folgendem konfiguriert ist: basierend darauf, dass die Informationen über das Ressourcenvorkaufsrecht eine Ressourcenvorkaufsablehnung darstellen, Bereitstellen, durch den CPU-Planer (123) des virtuellen Maschinensystems (120), der Informationen über das Ressourcenvorkaufsrecht an den Kern (130) und Einstellen von primärer Ausführungsplanung für die virtuelle Maschinenanwendung (121).

9. Rechnervorrichtung nach Anspruch 7, wobei die Host-Planungsliste zumindest eines von einer regelbasierten Liste, die Identifikationsinformationen über eine oder mehrere Anwendungen beinhaltet, die mit der höchsten Priorität auszuführen sind, einer weißen Liste, die Identifikationsinformationen über eine oder mehrere Anwendungen beinhaltet, die primär auszuführen sind, oder einer schwarzen Liste, die Identifikationsinformationen über eine oder mehrere Anwendungen beinhaltet, die nicht primär auszuführen sind, beinhaltet.

10. Rechnervorrichtung nach Anspruch 9, wobei, basierend darauf, dass die Anweisungen durch die Rechnervorrichtung ausgeführt werden, die Rechnervorrichtung (100) ferner zu Folgendem konfiguriert ist:
durch den CPU-Planer (113) des Host-Systems (110),
basierend darauf, dass die Ressourcenvorkaufsrecht-Bestätigungsanforderung für eine virtuelle Maschinenanwendung (121) von dem CPU-Planer (123) des virtuellen Maschinensystems (120) empfangen wird, Bestätigen einer realen Prozesskennung, PID, entsprechend einer Anwendungs-ID der virtuellen Maschinenanwendung unter Verwendung einer ID-Zuordnung des Kerns (130), und
Einstellen von Ressourcenvorkaufsplanung für die virtuelle Maschinenanwendung (121) durch Bereitstellen der bestimmten Informationen über das Ressourcenvorkaufsrecht für die virtuelle Maschinenanwendung an den Kern (130) unter Verwendung der realen PID der virtuellen Maschinenanwendung.

11. Rechnervorrichtung (100), umfassend:
ein Host-System (110);
ein virtuelles Maschinensystem (120);
eine oder mehrere zentrale Verarbeitungseinheiten, CPUs (141); und
einen Speicher (142), der Anweisungen speichert,
wobei die Rechnervorrichtung **dadurch gekennzeichnet ist, dass** basierend darauf, dass die Anweisungen durch die Rechnervorrichtung ausgeführt werden, die Rechnervorrichtung zu Folgendem konfiguriert ist:
basierend auf dem Empfangen, durch das Host-System, einer Anforderung zum Ausführen einer virtuellen Maschinenanwendung, Übertragen der Anforderung zum Ausführen der virtuellen Maschinenanwendung an das virtuelle Maschinensystem;
basierend auf dem Empfangen, durch einen CPU-Planer (113) des Host-Systems (110), der Anforderung zum Bestätigen des Ressourcenvorkaufsrechts zum Ausführen einer virtuellen Maschinenanwendung (121), Bestimmen eines Ressourcenvorkaufsrechts, um die virtuelle Maschinenanwendung, für die Ausführung durch Bezugnahme auf eine Host-Planungsliste angefordert wird, primär auszuführen, und Übertragen von Informationen über das bestimmte Ressourcenvorkaufsrecht an einen CPU-Planer (123) des virtuellen Maschinensystems; und
basierend auf den Informationen über das Ressourcenvorkaufsrecht, das dazu bestimmt ist, die virtuelle Maschinenanwendung primär auszuführen, durch den CPU-Planer des virtuellen Maschinensystems, Planen der virtuellen Maschinenanwendung, für die Ausführung angefordert wird, primär ausgeführt zu werden, und Bereitstellen eines Ergebnisses des Planens an einen Kern (130), der dazu konfiguriert ist, die Planungssteuerung basierend auf dem Planungsergebnis zu aktualisieren,
wobei die Host-Planungsliste Prioritätsinformationen über Anwendungen enthält, die verwendet werden, um das Ressourcenvorkaufsrecht für die Anwendungen durch den CPU-Planer des Host-Systems zu bestimmen, und wobei die Prioritätsinformationen für Anwendungen mit hoher Ressourcenvorkaufsnotwendigkeit auf hoch einstellbar sind und die Ressourcenvorkaufspriorität für Anwendungen mit niedriger Ressourcenvorkaufsnotwendigkeit auf niedrig einstellbar ist.

## Revendications

1. Procédé de fonctionnement d'un système informatique comprenant un système hôte et un système de machine virtuelle, le procédé comprenant :
la réception (301), par le système de machine virtuelle, d'une demande d'exécution d'une application de machine virtuelle ;
le procédé étant **caractérisé par** :
par un ordonnanceur d'unité centrale de traitement, CPU, d'un système de machine virtuelle, l'ordonnancement (302) de l'application de machine virtuelle dont l'exécution est demandée de manière à ce qu'elle soit exécutée de manière prioritaire, la fourniture (303) d'un résultat de l'ordonnancement à un noyau configuré pour effectuer un contrôle d'ordonnancement (304) par rapport à l'application de machine virtuelle en fonction du résultat d'ordonnancement, et la transmission (305) d'une demande de confirmation d'un droit de préemption de ressources pour l'application de machine virtuelle à un ordonnanceur de CPU du système hôte ;
sur la base de la réception, par l'ordonnanceur de CPU du système hôte, de la demande de confirmation du droit de préemption de ressources pour l'application de machine virtuelle, la détermination (306) d'un droit de préemption de ressources de l'application de machine virtuelle en se référant à une liste d'ordonnancement hôte, et la fourniture (307) d'informations sur le droit de préemption de ressources déterminé à l'ordonnanceur de CPU du système de machine virtuelle ;
sur la base de la réception, par l'ordonnanceur de CPU du système de machine virtuelle, des informations sur le droit de préemption de ressources déterminé par rapport à l'application de machine virtuelle, la mise à jour (308) d'un résultat d'ordonnancement pour l'application de machine virtuelle sur la base des informations sur le droit de préemption de ressources reçues du système hôte, et
la transmission (309), par l'ordonnanceur de CPU du système de machine virtuelle au noyau, d'un résultat d'ordonnancement mis à jour en fonction du résultat d'ordonnancement pour l'application de machine virtuelle, sur la base des informations sur le droit de préemption de ressources reçues du système hôte, dans lequel le noyau est configuré pour mettre à jour (310) le contrôle d'ordonnancement sur la base du résultat d'ordonnancement mis à jour,
dans lequel la liste d'ordonnancement hôte contient des informations de priorité sur les applications, qui sont utilisées pour déterminer le droit de préemption de ressources pour les applications par l'ordonnanceur de CPU du système hôte, et dans lequel les informations de priorité peuvent être réglées sur élevé pour les applications avec une nécessité de préemption de ressources élevée, et la priorité de préemption de ressources peut être réglée sur faible pour les applications avec une nécessité de préemption de ressources faible.

2. Procédé selon la revendication 1, comprenant en outre, sur la base des informations sur le droit de préemption des ressources indiquant un rejet de préemption des ressources, la fourniture (409), par l'ordonnanceur de CPU du système de machine virtuelle, des informations sur le droit de préemption de ressources au noyau et l'ajustement (410) de l'ordonnancement d'exécution prioritaire pour l'application de machine virtuelle.

3. Procédé selon la revendication 1, dans lequel la liste d'ordonnancement hôte comprend au moins un parmi une liste fondée sur des règles comprenant des informations d'identification concernant une ou plusieurs applications à exécuter avec une priorité élevée, une liste blanche comprenant des informations d'identification concernant une ou plusieurs applications à exécuter de manière prioritaire, ou une liste noire comprenant des informations d'identification concernant une ou plusieurs applications à ne pas exécuter de manière prioritaire.

4. Procédé selon la revendication 1, comprenant en outre :
par l'ordonnanceur de CPU du système hôte,
sur la base du fait que la demande de confirmation de droit de préemption de ressources pour une application de machine virtuelle soit reçue en provenance de l'ordonnanceur de CPU du système de machine virtuelle, la confirmation (407) d'un identifiant de processus, PID, réel correspondant à un ID d'application de l'application de machine virtuelle à l'aide d'une carte d'ID du noyau, et
l'ajustement (410) de l'ordonnancement de préemption de ressources pour l'application de machine virtuelle en fournissant au noyau les informations déterminées sur un droit de préemption de ressources pour l'application de machine virtuelle, en utilisant le PID réel de l'application de machine virtuelle.

5. Procédé selon la revendication 4, dans lequel la carte d'ID du noyau comprend un ID d'application, App ID, un identifiant de processus, PID, virtuel, un PID réel, et des informations de priorité de préemption de ressources d'une application.

6. Procédé de fonctionnement d'un système informatique comprenant un système hôte et un système de machine virtuelle, le procédé étant **caractérisé par** :
sur la base de la réception, par le système hôte, d'une demande d'exécution d'une application de machine virtuelle, la transmission de la demande d'exécution de l'application de machine virtuelle au système de machine virtuelle,
sur la base de la réception, par un ordonnanceur d'unité centrale de traitement, CPU, du système hôte, de la demande de confirmation du droit de préemption de ressources pour l'exécution de l'application de machine virtuelle, la détermination (306) d'un droit de préemption de ressources pour exécuter de manière prioritaire l'application de machine virtuelle dont l'exécution est demandée en se référant à une liste d'ordonnancement hôte, et la transmission (307) d'informations sur le droit de préemption de ressources déterminé à un ordonnanceur de CPU du système de machine virtuelle, et
par l'ordonnanceur de CPU du système de machine virtuelle, sur la base des informations sur un droit de préemption de ressources déterminé pour exécuter de manière prioritaire l'application de machine virtuelle, l'ordonnancement (308) de l'application de machine virtuelle dont l'exécution est demandée de manière prioritaire, et la fourniture (309) d'un résultat de l'ordonnancement à un noyau configuré pour mettre à jour (310) le contrôle d'ordonnancement sur la base du résultat d'ordonnancement,
dans lequel la liste d'ordonnancement hôte contient des informations de priorité sur les applications, qui sont utilisées pour déterminer le droit de préemption de ressources pour les applications par l'ordonnanceur de CPU du système hôte, et dans lequel les informations de priorité peuvent être réglées sur élevé pour les applications avec une nécessité de préemption de ressources élevée, et la priorité de préemption de ressources peut être réglée sur faible pour les applications avec une nécessité de préemption de ressources faible.

7. Dispositif informatique (100) comprenant :
un système hôte (110) ;
un système de machine virtuelle (120) ;
une ou plusieurs unités centrales de traitement, CPU (141) ; et
une mémoire (142) stockant des instructions,
dans lequel, sur la base de l'exécution des instructions par le dispositif informatique, le dispositif informatique est configuré pour :
recevoir, par le système de machine virtuelle (120), une demande d'exécution d'une application de machine virtuelle (121) ;
**caractérisé en ce que** le dispositif informatique est configuré pour :
par un ordonnanceur de CPU (123) du système de machine virtuelle, ordonnancer l'application de machine virtuelle (121) dont l'exécution est demandée de manière prioritaire, fournir un résultat de l'ordonnancement à un noyau (130) configuré pour effectuer un contrôle d'ordonnancement (304) par rapport à l'application de machine virtuelle en fonction du résultat d'ordonnancement, et transmettre une demande de confirmation d'un droit de préemption de ressources pour l'application de machine virtuelle à un ordonnanceur de CPU (113) du système hôte ;
sur la base de la réception, par l'ordonnanceur de CPU (113) du système hôte, de la demande confirmant le droit de préemption de ressources pour l'application de machine virtuelle, déterminer un droit de préemption de ressources de l'application de machine virtuelle (121) en se référant à une liste d'ordonnancement hôte, et fournir des informations sur le droit de préemption de ressources déterminé à l'ordonnanceur de CPU (123) du système de machine virtuelle ;
sur la base de la réception, par l'ordonnanceur de CPU (123) du système de machine virtuelle, des informations sur le droit de préemption des ressources déterminé par rapport à l'application de machine virtuelle (121), mettre à jour un résultat d'ordonnancement pour l'application de machine virtuelle sur la base des informations sur le droit de préemption des ressources reçues du système hôte (110), et
transmettre, par l'ordonnanceur de CPU (123) du système de machine virtuelle au noyau (130), un résultat d'ordonnancement mis à jour en fonction du résultat d'ordonnancement pour l'application de machine virtuelle (121), sur la base des informations sur le droit de préemption de ressources reçues du système hôte (110), dans lequel le noyau est configuré pour mettre à jour le contrôle d'ordonnancement sur la base du résultat d'ordonnancement mis à jour,
dans lequel la liste d'ordonnancement hôte contient des informations de priorité sur les applications, qui sont utilisées pour déterminer le droit de préemption de ressources pour les applications par l'ordonnanceur de CPU du système hôte, et dans lequel les informations de priorité peuvent être réglées sur élevé pour les applications avec une nécessité de préemption de ressources élevée, et la priorité de préemption de ressources peut être réglée sur faible pour les applications avec une nécessité de préemption de ressources faible.

8. Dispositif informatique selon la revendication 7, dans lequel, sur la base de l'exécution des instructions par le dispositif informatique (100), le dispositif informatique est en outre configuré pour : sur la base du fait que les informations sur le droit de préemption des ressources indiquent un rejet de préemption des ressources, fournir, par l'ordonnanceur de CPU (123) du système de machine virtuelle (120), les informations sur le droit de préemption des ressources au noyau (130) et ajuster l'ordonnancement d'exécution prioritaire pour l'application de machine virtuelle (121).

9. Dispositif informatique selon la revendication 7, dans lequel la liste d'ordonnancement hôte comprend au moins l'une parmi une liste basée sur des règles comprenant des informations d'identification concernant une ou plusieurs applications à exécuter avec la priorité élevée, une liste blanche comprenant des informations d'identification concernant une ou plusieurs applications à exécuter de manière prioritaire, ou une liste noire comprenant des informations d'identification concernant une ou plusieurs applications à ne pas exécuter de manière prioritaire.

10. Dispositif informatique selon la revendication 9, dans lequel, sur la base de l'exécution des instructions par le dispositif informatique, le dispositif informatique (100) est en outre configuré pour :
par l'ordonnanceur de CPU (113) du système hôte (110),
sur la base du fait que la demande de confirmation du droit de préemption de ressources pour une application de machine virtuelle (121) soit reçue en provenance de l'ordonnanceur de CPU (123) du système de machine virtuelle (120), confirmer un identifiant de processus, PID, réel correspondant à un ID d'application de l'application de machine virtuelle à l'aide d'une carte d'ID du noyau (130), et
ajuster l'ordonnancement de préemption de ressources pour l'application de machine virtuelle (121) en fournissant au noyau (130) les informations déterminées sur le droit de préemption de ressources pour l'application de machine virtuelle, en utilisant le PID réel de l'application de machine virtuelle.

11. Dispositif informatique (100) comprenant :
un système hôte (110) ;
un système de machine virtuelle (120) ;
une ou plusieurs unités centrales de traitement, CPU (141) ; et
une mémoire (142) stockant des instructions,
le dispositif informatique étant **caractérisé en ce que**, sur la base de l'exécution des instructions par le dispositif informatique, le dispositif informatique est configuré pour :
sur la base de la réception, par le système hôte, d'une demande d'exécution d'une application de machine virtuelle, transmettre la demande d'exécution de l'application de machine virtuelle au système de machine virtuelle,
sur la base de la réception, par un ordonnanceur de CPU (113) du système hôte (110), de la demande de confirmation du droit de préemption de ressources pour l'exécution d'une application de machine virtuelle (121), déterminer un droit de préemption de ressources pour exécuter de manière prioritaire l'application de machine virtuelle dont l'exécution est demandée en se référant à une liste d'ordonnancement hôte, et transmettre des informations sur le droit de préemption de ressources déterminé à un ordonnanceur de CPU (123) du système de machine virtuelle ; et
sur la base des informations sur le droit de préemption de ressources déterminé pour exécuter de manière prioritaire l'application de machine virtuelle, par l'ordonnanceur de CPU du système de machine virtuelle, ordonnancer l'application de machine virtuelle dont l'exécution est demandée de manière prioritaire, et fournir un résultat de l'ordonnancement à un noyau (130) configuré pour mettre à jour le contrôle d'ordonnancement sur la base du résultat d'ordonnancement,
dans lequel la liste d'ordonnancement hôte contient des informations de priorité sur les applications, qui sont utilisées pour déterminer le droit de préemption de ressources pour les applications par l'ordonnanceur de CPU du système hôte, et dans lequel les informations de priorité peuvent être réglées sur élevé pour les applications avec une nécessité de préemption de ressources élevée, et la priorité de préemption de ressources peut être réglée sur faible pour les applications avec une nécessité de préemption de ressources faible.
